(19) Europäisches Patentamt
European Patent Office
Office européen des brevets

(11) EP 4 723 278 A1

(12) EUROPEAN PATENT APPLICATION
published in accordance with Art. 153(4) EPC

(43) Date of publication:
**08.04.2026 Bulletin 2026/15**

(21) Application number: **23938943.0**

(22) Date of filing: **01.06.2023**

(51) International Patent Classification (IPC):
***H01M 10/0567*** *(2010.01)* ***H01M 10/052*** *(2010.01)*

(52) Cooperative Patent Classification (CPC):
Y02E 60/10

(86) International application number:
**PCT/CN2023/097749**

(87) International publication number:
**WO 2024/243954 (05.12.2024 Gazette 2024/49)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Contemporary Amperex Technology Co., Limited**
**Ningde, Fujian 352100 (CN)**

(72) Inventors:
- **LIU, Jiao**
  **Ningde, Fujian 352100 (CN)**
- **ZHANG, Limei**
  **Ningde, Fujian 352100 (CN)**
- **CHEN, Peipei**
  **Ningde, Fujian 352100 (CN)**
- **REN, Jiamo**
  **Ningde, Fujian 352100 (CN)**

(74) Representative: **Ziebig Hengelhaupt Intellectual Property Attorneys**
**Patentanwaltskanzlei PartGmbB**
**Leipziger Straße 49**
**10117 Berlin (DE)**

# (54) SECONDARY BATTERY AND ELECTRIC DEVICE

(57) The present application provides a secondary battery and an electrical apparatus. The secondary battery of the present application includes a negative electrode plate and a non-aqueous electrolyte solution. The negative electrode plate includes a negative electrode active material. The volume average particle size Dv50 of the negative electrode active material is 6-20 μm. The non-aqueous electrolyte solution includes an additive and a non-aqueous solvent. The additive includes a cyclic sulfate compound represented by Formula (I). The non-aqueous solvent includes ethylene carbonate.

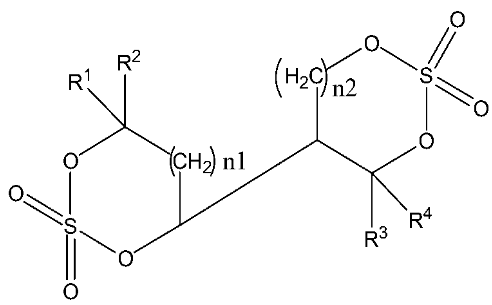

Formula (I).

EP 4 723 278 A1

5

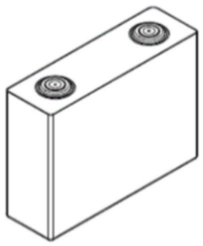

FIG. 1

## Description

### TECHNICAL FIELD

The present application relates to the technical field of lithium batteries, and in particular, to a secondary battery and an electrical apparatus.

### BACKGROUND

In recent years, with the increasingly wide use of secondary batteries, secondary batteries are widely used in energy storage power systems such as water power, thermal power, wind power and solar power stations, as well as electric tools, electric bicycles, electric motorcycles, electric vehicles, military equipment, aerospace and other fields. Due to the great development of secondary batteries, higher requirements have also been put forward for their cycle performance, storage performance and safety performance.

### SUMMARY OF THE INVENTION

The present application is conducted in view of the above issues, and aims to provide a secondary battery and an electrical apparatus. The secondary battery of the present application improves the cycle performance and storage performance of the battery and reduces the cycle gas production of the battery by using an ethylene carbonate solvent, an additive and a negative electrode active material with a certain particle size in cooperation.

In order to achieve the above objectives, the first aspect of the present application provides a secondary battery, including a negative electrode plate and a non-aqueous electrolyte solution. The negative electrode plate includes a negative electrode active material. The volume average particle size Dv50 of the negative electrode active material is 6-20 μm, and optionally 8-15 μm. The non-aqueous electrolyte solution includes an additive and a non-aqueous solvent. The non-aqueous solvent includes ethylene carbonate.

The additive includes a cyclic sulfate compound represented by Formula (I),

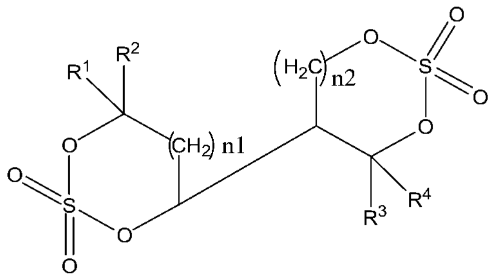

Formula (I)

where $R^1$, $R^2$, $R^3$ and $R^4$ are independently selected from any one of a group having a structure represented by Formula (II), a hydrogen atom, a halogen atom, a C1-C6 alkyl group, a C1-C6 haloalkyl group, a C1-C6 alkoxy group, a C1-C6 haloalkoxy group, a C2-C6 alkenyl group, a C2-C6 ester group, a cyano group and a sulfonic acid group, and n1 and n2 are independently any integer from 0 to 2;

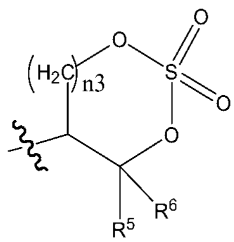

Formula (II)

$R^5$ and $R^6$ are independently selected from any one of a hydrogen atom, a halogen atom, a C1-C6 alkyl group, a C1-C6

haloalkyl group, a C1-C6 alkoxy group, a C1-C6 haloalkoxy group, a C2-C6 alkenyl group, a C2-C6 ester group, a cyano group and a sulfonic acid group, and n3 is any integer from 0 to 2;
$R^1$ and $R^2$ are not hydrogen atoms at the same time, and $R^3$ and $R^4$ are not hydrogen atoms at the same time;
alternatively, $R^1$, $R^2$, $R^3$, $R^4$, $R^5$ and $R^6$ satisfy the following conditions:

$R^1$ and $R^2$ are hydrogen atoms at the same time, one of $R^3$ and $R^4$ is a hydrogen atom and the other is any one of a group having a structure represented by General Formula (II), a halogen atom, a C1-C6 alkyl group, a C1-C6 haloalkyl group, a C1-C6 alkoxy group, a C1-C6 haloalkoxy group, a C2-C6 alkenyl group, a C2-C6 ester group, a cyano group and a sulfonic acid group, and $R^5$ and $R^6$ in the group having a structure represented by General Formula (II) are not hydrogen atoms at the same time;
alternatively, $R^1$, $R^2$, $R^3$, $R^4$, $R^5$ and $R^6$ satisfy the following conditions:
$R^3$ and $R^4$ are hydrogen atoms at the same time, one of $R^1$ and $R^2$ is a hydrogen atom and the other is any one of a group having a structure represented by General Formula (II), a halogen atom, a C1-C6 alkyl group, a C1-C6 haloalkyl group, a C1-C6 alkoxy group, a C1-C6 haloalkoxy group, a C2-C6 alkenyl group, a C2-C6 ester group, a cyano group and a sulfonic acid group, and $R^5$ and $R^6$ in the group having a structure represented by General Formula (II) are not hydrogen atoms at the same time.

Therefore, the present application adopts an ethylene carbonate solvent and an additive to form a non-aqueous electrolyte solution matched with a negative electrode active material having a certain particle size. During the first charging process of the battery, ethylene carbonate and an additive form a more stable inorganic and organic mixed SEI film on the surface of a negative electrode with a stronger electron blocking ability, which inhibits the gas production of the reaction between the electrolyte solution and the negative electrode, thereby reducing the cycle gas production of the battery and improving the cycle performance and storage performance of the battery. The negative electrode active material having a certain particle size also participates in improving the cycle performance of the battery. In addition, ethylene carbonate may promote the dissociation of lithium salts in the electrolyte solution to improve the conductivity of the electrolyte solution.
In any of embodiments, the cyclic sulfate compound has a structure represented by Formula (I-1),

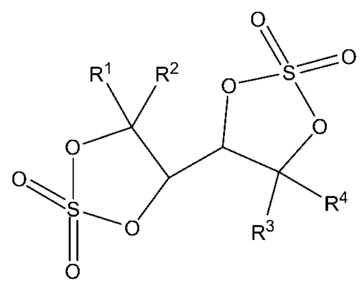

Formula (I-1)

where $R^1$, $R^2$, $R^3$ and $R^4$ are independently selected from any one of a group having a structure represented by General Formula (II-1), a hydrogen atom, a halogen atom, a C1-C6 alkyl group, a C1-C6 haloalkyl group, a C1-C6 alkoxy group, a C1-C6 haloalkoxy group, a C2-C6 alkenyl group, a C2-C6 ester group, a cyano group and a sulfonic acid group; and

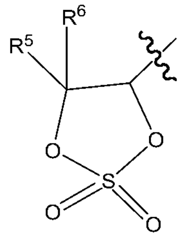

Formula (II-1)

$R^5$ and $R^6$ are independently selected from any one of a hydrogen atom, a halogen atom, a C1-C6 alkyl group, a C1-C6

haloalkyl group, a C1-C6 alkoxy group, a C1-C6 haloalkoxy group, a C2-C6 alkenyl group, a C2-C6 ester group, a cyano group and a sulfonic acid group.

The cyclic sulfate rings in General Formula (I-1) are all five-membered rings, which may form a denser SEI film. Compared with a six-membered ring, the five-membered ring has larger ring tension and is easy to form a film at the negative electrode. The six-membered ring has smaller ring tension and higher stability, and is slower to form a film at the negative electrode. Therefore, the efficiency of generating an SEI film that blocks electrons is lower, which affects the effect of the SEI film.

In any of embodiments, $R^1$, $R^2$, $R^3$ and $R^4$ are independently selected from any one of a group having a structure represented by General Formula (II-1), a hydrogen atom, a halogen atom, a C1-C3 alkyl group, a C1-C3 haloalkyl group, a C1-C3 alkoxy group, a C1-C3 haloalkoxy group and a cyano group; and $R^5$ and $R^6$ are independently selected from any one of a hydrogen atom, a halogen atom, a C1-C3 alkyl group, a C1-C3 haloalkyl group, a C1-C3 alkoxy group, a C1-C3 haloalkoxy group and a cyano group.

Optionally, $R^1$, $R^2$, $R^3$ and $R^4$ are independently selected from any one of a group having a structure represented by General Formula (II-1), a hydrogen atom, a halogen atom, a C1-C3 alkyl group, a C1-C3 haloalkyl group, a C1-C3 alkoxy group and a cyano group; and $R^5$ and $R^6$ are independently selected from any one of a hydrogen atom, a halogen atom, a C1-C3 alkyl group, a C1-C3 haloalkyl group, a C1-C3 alkoxy group and a cyano group.

More optionally, $R^1$, $R^2$, $R^3$ and $R^4$ are independently selected from any one of a group having a structure represented by General Formula (II-1), a hydrogen atom, an F atom, a Cl atom, a Br atom, a methyl group, an ethyl group, a propyl group, an isopropyl group, a trifluoromethyl group, an ethoxy group and a cyano group; and $R^5$ and $R^6$ are independently selected from any one of a hydrogen atom, an F atom, a Cl atom, a Br atom, a methyl group, an ethyl group, a propyl group, an isopropyl group, a trifluoromethyl group, an ethoxy group and a cyano group.

Further optionally, the group having a structure represented by General Formula (II-1) is selected from any one of the following groups:

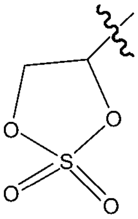 , 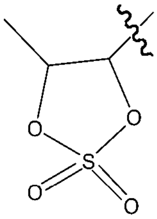 , 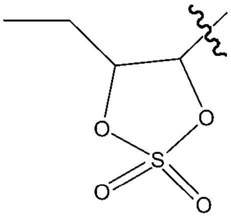 , 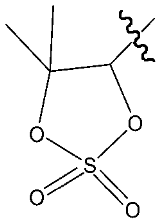 , 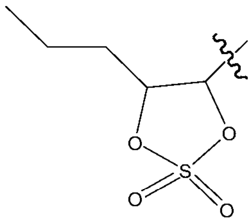 , 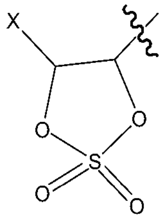

and

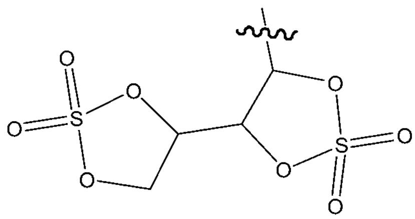 ,

where X is an F atom, a Cl atom or a Br atom.

In any of embodiments, $R^1$, $R^2$, $R^3$ and $R^4$ are independently selected from any one of

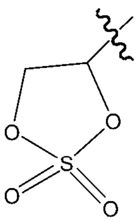 , 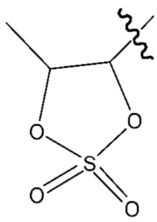 , 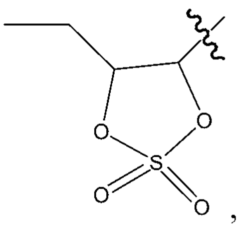 , 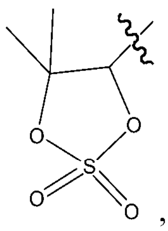 , 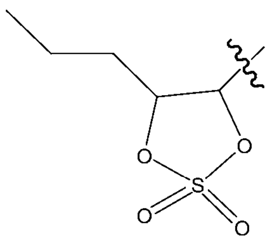 , 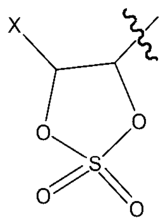 ,

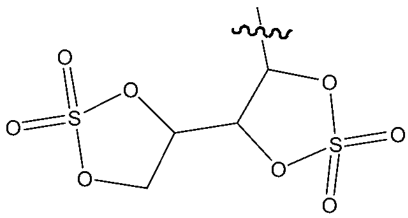,

a hydrogen atom, an F atom, a Cl atom, a Br atom, a methyl group, an ethyl group, a propyl group, an isopropyl group, a trifluoromethyl group, an ethoxy group and a cyano group, and X is an F atom.

Optionally, $R^1$, $R^2$, $R^3$ and $R^4$ are independently selected from any one of

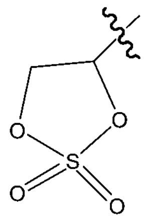,

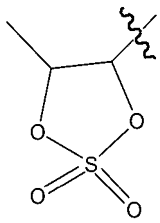, 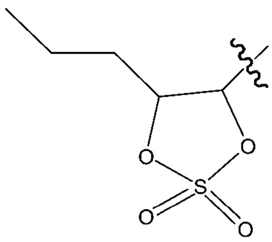, 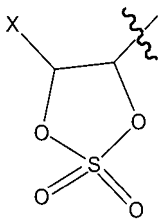, 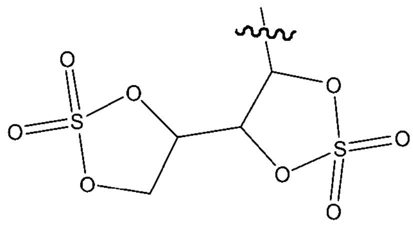,

a hydrogen atom, an F atom, a methyl group, an ethyl group, a propyl group, a trifluoromethyl group, an ethoxy group and a cyano group, and X is an F atom.

In any of embodiments, the cyclic sulfate compound is selected from the following compounds:

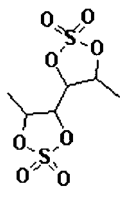 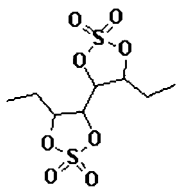 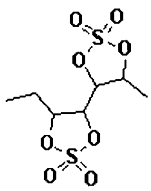 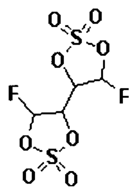 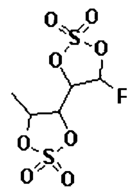

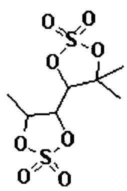 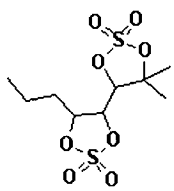 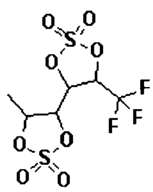 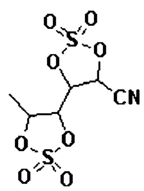 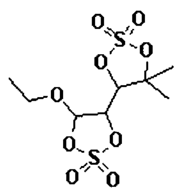

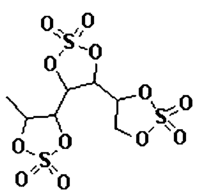 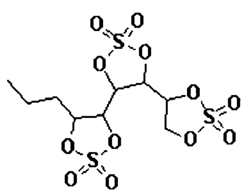 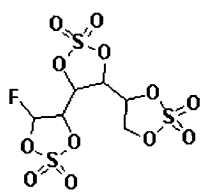 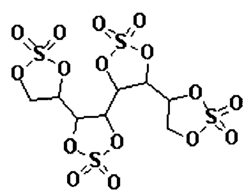

A preparation method of the above cyclic sulfate compound is simple, is conducive to popularization and implementation in industry, and has a more stable effect on improving the cycle performance of the battery.

In any of embodiments, the mass content of the additive in the non-aqueous electrolyte solution is 0.001%-20%, optionally 0.0025%-16.7%, more optionally 0.005%-10%, and further optionally 0.05%-5%.

The mass content of the additive in the non-aqueous electrolyte solution is within the above range, which may further improve the stability and electron blocking ability of the SEI film on the surface of the negative electrode, thereby further improving the cycle performance and storage performance of the battery and reducing the cycle gas production of the battery.

In any of embodiments, the mass content of the ethylene carbonate in the non-aqueous solvent is 5%-60%, optionally 10%-50%, and more optionally 20%-40%.

The mass content of ethylene carbonate in the non-aqueous solvent is within the above range, which may improve the cycle performance and storage performance of the battery and reduce the cycle gas production of the battery, and is conducive to improving the conductivity of the electrolyte solution to improve the fast charging performance of the battery.

In any of embodiments, the volume average particle size Dv50 of the negative electrode active material and the mass content $W_1$ of the additive in the non-aqueous electrolyte solution satisfy: $0.001 \leq W_1 \times 1000/Dv50 \leq 20$, and optionally $0.0025 \leq W_1 \times 1000/Dv50 \leq 16.7$, where the unit of the volume average particle size Dv50 is $\mu$m.

When the above conditions are satisfied: on the one hand, the negative electrode active material has higher active ion transmission performance and electron transmission performance, and the powder compacted density of the negative electrode active material is higher; and on the other hand, side reactions between the electrolyte solution and the negative electrode are reduced, the cycle gas production of the battery is reduced, and the cycle performance and storage performance of the battery are improved.

In any of embodiments, the intensity of the peak of the negative electrode active material at a Raman shift of 1360 $cm^{-1}$ is $I_D$, the intensity of the peak of the negative electrode active material at a Raman shift of 1585 $cm^{-1}$ is $I_G$, and $I_D/I_G \leq 0.5$, optionally $I_D/I_G \leq 0.25$, and more optionally $0.1 \leq I_D/I_G \leq 0.2$.

The $I_D/I_G$ of the negative electrode active material is within the above range, which is conducive to improving the surface stability of the negative electrode active material and reducing the side reactions between the electrolyte solution and the negative electrode, thereby reducing the volume expansion of the battery during the cycle process, improving the cycle performance of the battery, and improving the storage performance.

In any of embodiments, the secondary battery is a lithium secondary battery.

The second aspect of the present application provides an electrical apparatus, including the battery according to the first aspect of the present application.

## DESCRIPTION OF DRAWINGS

FIG. 1 is a schematic diagram of a secondary battery according to an embodiment of the present application.
FIG. 2 is an exploded view of the secondary battery according to an embodiment of the present application shown in FIG. 1.
FIG. 3 is a schematic diagram of a battery module according to an embodiment of the present application.
FIG. 4 is a schematic diagram of a battery pack according to an embodiment of the present application.
FIG. 5 is an exploded view of the battery pack according to an embodiment of the present application shown in FIG. 4.
FIG. 6 is a schematic diagram of an electrical apparatus in which a secondary battery is used as a power source according to an embodiment of the present application.

Description of reference numerals:
1. Battery pack; 2. Upper box; 3. Lower box; 4. Battery module; 5. Secondary battery; 51. Case; 52. Electrode assembly; 53. Top cover assembly.

## DETAILED DESCRIPTION

Hereinafter, the embodiments of the secondary battery, battery module, battery pack and electrical apparatus of the present application are specifically disclosed by referring to the detailed descriptions of the drawings as appropriate. However, there may be cases where unnecessary detailed descriptions are omitted. For example, there are cases where detailed descriptions of well-known items and repeated descriptions of actually identical structures are omitted. This is to avoid unnecessary redundancy in the following descriptions and to facilitate understanding by those skilled in the art. In addition, the drawings and subsequent descriptions are provided for those skilled in the art to fully understand the present application, and are not intended to limit the subject matter recited in the claims.

The "ranges" disclosed in the present application are defined in the form of lower and upper limits. A given range

is defined by selecting a lower limit and an upper limit, and the selected lower and upper limits define the boundaries of the particular range. The range defined in this way may include or may not include end values, and may be arbitrarily combined, that is, any lower limit can be combined with any upper limit to form a range. For example, if the ranges 60-120 and 80-110 are listed for specific parameters, it is understood that the ranges 60-110 and 80-120 are also expected. In addition, if the listed minimum range values are 1 and 2 and if the listed maximum range values are 3, 4, and 5, the following ranges can all be expected: 1-3, 1-4, 1-5, 2-3, 2-4, and 2-5. In the present application, unless otherwise specified, the numerical range "a-b" represents an abbreviated representation of any combination of real numbers between a and b, where a and b are both real numbers. For example, the numerical range "0-5" indicates that all real numbers between "0-5" have been listed herein, and "0-5" is only an abbreviated representation of combinations of these numbers. In addition, when a parameter is expressed as an integer greater than or equal to 2, it is equivalent to disclosing that the parameter is, for example, an integer of 2, 3, 4, 5, 6, 7, 8, 9, 10, 11, 12, and the like.

Unless otherwise specified, all the embodiments and optional embodiments of the present application may be combined with each other to form new technical solutions.

Unless otherwise specified, all technical features and optional technical features of the present application may be combined with each other to form new technical solutions.

If not specifically stated, all steps of the present application may be performed sequentially or randomly, preferably sequentially. For example, a method includes steps (a) and (b), meaning that the method may include steps (a) and (b) performed sequentially, or may include steps (b) and (a) performed sequentially. For example, the reference to the fact that the method may further include step (c), meaning that step (c) may be added to the method in any order. For example, the method may include steps (a), (b) and (c), or may further include steps (a), (c) and (b), or may further include steps (c), (a) and (b), and the like.

Unless otherwise specifically stated, "including" and "containing" mentioned in the present application may be open-ended, or may be closed-ended. For example, "including" and "containing" may indicate that it is possible to include or contain other components not listed, and it is also possible to include or contain only the listed components.

If not specifically stated, the term "or" is inclusive in the present application. For example, the phrase "A or B" means "A, B, or both A and B." More specifically, the condition "A or B" is satisfied by any of the following: A is true (or present) and B is false (or absent); A is false (or absent) and B is true (or present); or both A and B are true (or present).

Unless otherwise specified, in the present application, the term "halogen" refers to an atom of a Group VII A element, including fluorine (F), chlorine (Cl), bromine (Br), iodine (I), astatine (At), etc.

If not otherwise specified, in the present application, the term "C1-C6 alkyl" refers to straight or branched alkyl containing 1 to 6 carbon atoms, specifically including C1-C3 alkyl and C2-C4 alkyl, such as methyl, ethyl, n-propyl, isopropyl, n-butyl, isobutyl, sec-butyl, tert-butyl, n-pentyl, isopentyl, neopentyl or n-hexyl.

If not otherwise specified, in the present application, the term "C1-C6 haloalkyl" refers to one or more H atoms on C1-C6 alkyl being substituted by halogen, where the definitions of "C1-C6 alkyl" and "halogen" are described above, specifically including C1-C3 haloalkyl and C2-C4 haloalkyl, such as monofluoromethyl, difluoromethyl, trifluoromethyl, and 2,2,2-trifluoroethyl.

If not otherwise specified, in the present application, the term "C1-C6 alkoxy" refers to a group formed in the form of C1-C6 alkyl-O-, where the definition of "C1-C6 alkyl" is described above. Non-limiting examples of suitable C1-C6 alkoxy include methoxy, ethoxy, isopropoxy, etc.

If not otherwise specified, in the present application, the term "C1-C6 haloalkoxy" refers to one or more H atoms on C1-C6 alkoxy being substituted by halogen, where the definitions of "C1-C6 alkoxy" and "halogen" are described above, specifically including C1-C3 haloalkoxy and C2-C4 haloalkoxy, such as difluoromethoxy, trifluoromethoxy, and 2,2,2-trifluoroethoxy.

If not otherwise specified, in the present application, the term "C2-C6 alkenyl" refers to a straight or branched monovalent hydrocarbon group containing 2 to 6 carbon atoms and having at least one unsaturated carbon-carbon double bond, specifically including C2-C5 alkenyl and C2-C4 alkenyl, such as ethylene, propylene, n-butene, isobutylene, n-pentene, and isopentene.

If not otherwise specified, in the present application, the term "C2-C6 ester group" refers to - COO-C1-C6 alkyl, where the definition of "C1-C6 alkyl" is described above, specifically including C2-C5 ester groups and C2-C4 ester groups, such as $-COOCH_3$ and $-COOCH_2CH_3$.

[Secondary battery]

A secondary battery also known as a rechargeable battery or a storage battery refers to a battery that can be used continually by activating an active material in a charging manner after the battery is discharged.

Generally, the secondary battery includes a positive electrode plate, a negative electrode plate, a separator and an electrolyte solution. During charging and discharging of the battery, active ions (e.g., lithium ions) are intercalated and deintercalated back and forth between the positive electrode plate and the negative electrode plate. The separator is

arranged between the positive electrode plate and the negative electrode plate, and mainly functions to prevent a short circuit between the positive electrode and the negative electrode while allowing active ions to pass through. The electrolyte solution mainly plays a role in conducting active ions between the positive electrode plate and the negative electrode plate.

An embodiment of the present application provides a secondary battery, including a negative electrode plate and a non-aqueous electrolyte solution. The negative electrode plate includes a negative electrode active material. The volume average particle size Dv50 of the negative electrode active material is 6-20 μm, and optionally 8-15 μm, such as 6 μm, 7 μm, 8 μm, 9 μm, 10 μm, 12 μm, 13 μm, 15 μm, 17 μm, 18 μm, 20 μm and a range consisting of any of the above values. The non-aqueous electrolyte solution includes an additive and a non-aqueous solvent. The non-aqueous solvent includes ethylene carbonate.

The additive includes a cyclic sulfate compound represented by Formula (I),

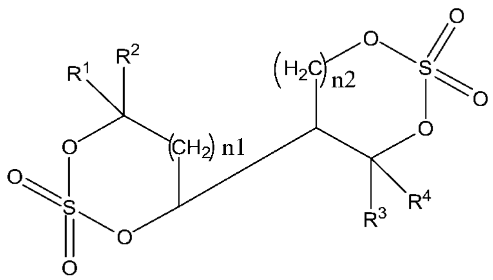

Formula (I)

where $R^1$, $R^2$, $R^3$ and $R^4$ are independently selected from any one of a group having a structure represented by Formula (II), a hydrogen atom, a halogen atom, a C1-C6 alkyl group, a C1-C6 haloalkyl group, a C1-C6 alkoxy group, a C1-C6 haloalkoxy group, a C2-C6 alkenyl group, a C2-C6 ester group, a cyano group and a sulfonic acid group, and n1 and n2 are independently any integer from 0 to 2, such as 0, 1 or 2;

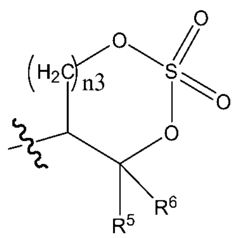

Formula (II)

$R^5$ and $R^6$ are independently selected from any one of a hydrogen atom, a halogen atom, a C1-C6 alkyl group, a C1-C6 haloalkyl group, a C1-C6 alkoxy group, a C1-C6 haloalkoxy group, a C2-C6 alkenyl group, a C2-C6 ester group, a cyano group and a sulfonic acid group, and n3 is any integer from 0 to 2, such as 0, 1 or 2;

$R^1$ and $R^2$ are not hydrogen atoms at the same time, and $R^3$ and $R^4$ are not hydrogen atoms at the same time;

alternatively, $R^1$, $R^2$, $R^3$, $R^4$, $R^5$ and $R^6$ satisfy the following conditions:

$R^1$ and $R^2$ are hydrogen atoms at the same time, one of $R^3$ and $R^4$ is a hydrogen atom and the other is any one of a group having a structure represented by General Formula (II), a halogen atom, a C1-C6 alkyl group, a C1-C6 haloalkyl group, a C1-C6 alkoxy group, a C1-C6 haloalkoxy group, a C2-C6 alkenyl group, a C2-C6 ester group, a cyano group and a sulfonic acid group, and $R^5$ and $R^6$ in the group having a structure represented by General Formula (II) are not hydrogen atoms at the same time;

alternatively, $R^1$, $R^2$, $R^3$, $R^4$, $R^5$ and $R^6$ satisfy the following conditions:

$R^3$ and $R^4$ are hydrogen atoms at the same time, one of $R^1$ and $R^2$ is a hydrogen atom and the other is any one of a group having a structure represented by General Formula (II), a halogen atom, a C1-C6 alkyl group, a C1-C6 haloalkyl group, a C1-C6 alkoxy group, a C1-C6 haloalkoxy group, a C2-C6 alkenyl group, a C2-C6 ester group, a cyano group and a sulfonic acid group, and $R^5$ and $R^6$ in the group having a structure represented by General Formula (II) are not hydrogen atoms at the same time.

Although the mechanism is not clear, the applicant unexpectedly discovered that the present application adopts an ethylene carbonate solvent and an additive to form a non-aqueous electrolyte solution matched with a negative electrode active material having a certain particle size. During the first charging process of the battery, ethylene carbonate and an additive form a more stable inorganic and organic mixed SEI film on the surface of a negative electrode with a stronger electron blocking ability, which inhibits the gas production of the reaction between the electrolyte solution and the negative electrode, thereby reducing the cycle gas production of the battery and improving the cycle performance and storage performance of the battery. The negative electrode active material having a certain particle size also participates in improving the cycle performance of the battery. In addition, ethylene carbonate may promote the dissociation of lithium salts in the electrolyte solution to improve the conductivity of the electrolyte solution.

The volume average particle size Dv50 refers to the particle size when the cumulative volume distribution percentage of the negative electrode active material reaches 50%. In some embodiments, the volume average particle size Dv50 is measured by instruments and methods known in the art, for example, may be measured by a laser particle size analyzer (such as Master Size 300) with reference to GB/T 19077-2016 particle size distribution-laser diffraction methods.

In some embodiments, the cyclic sulfate compound has a structure represented by Formula (I-1),

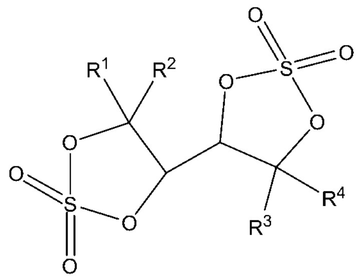

Formula (I-1)

where $R^1$, $R^2$, $R^3$ and $R^4$ are independently selected from any one of a group having a structure represented by General Formula (II-1), a hydrogen atom, a halogen atom, a C1-C6 alkyl group, a C1-C6 haloalkyl group, a C1-C6 alkoxy group, a C1-C6 haloalkoxy group, a C2-C6 alkenyl group, a C2-C6 ester group, a cyano group and a sulfonic acid group; and

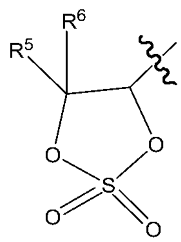

Formula (II-1)

$R^5$ and $R^6$ are independently selected from any one of a hydrogen atom, a halogen atom, a C1-C6 alkyl group, a C1-C6 haloalkyl group, a C1-C6 alkoxy group, a C1-C6 haloalkoxy group, a C2-C6 alkenyl group, a C2-C6 ester group, a cyano group and a sulfonic acid group.

The cyclic sulfate rings in General Formula (I-1) are all five-membered rings, which may form a denser SEI film. Compared with a six-membered ring, the five-membered ring has larger ring tension and is easy to form a film at the negative electrode. The six-membered ring has smaller ring tension and higher stability, and is slower to form a film at the negative electrode. Therefore, the efficiency of generating an SEI film that blocks electrons is lower, which affects the effect of the SEI film.

In some embodiments, $R^1$,$R^2$, $R^3$ and $R^4$ are independently selected from any one of a group having a structure represented by General Formula (II-1), a hydrogen atom, a halogen atom, a C1-C3 alkyl group, a C1-C3 haloalkyl group, a C1-C3 alkoxy group, a C1-C3 haloalkoxy group and a cyano group; and $R^5$ and $R^6$ are independently selected from any one of a hydrogen atom, a halogen atom, a C1-C3 alkyl group, a C1-C3 haloalkyl group, a C1-C3 alkoxy group, a C1-C3 haloalkoxy group and a cyano group.

Optionally, $R^1$, $R^2$, $R^3$ and $R^4$ are independently selected from any one of a group having a structure represented by General Formula (II-1), a hydrogen atom, a halogen atom, a C1-C3 alkyl group, a C1-C3 haloalkyl group, a C1-C3 alkoxy group and a cyano group; and $R^5$ and $R^6$ are independently selected from any one of a hydrogen atom, a halogen atom, a C1-C3 alkyl group, a C1-C3 haloalkyl group, a C1-C3 alkoxy group and a cyano group.

More optionally, $R^1$, $R^2$, $R^3$ and $R^4$ are independently selected from any one of a group having a structure represented by General Formula (II-1), a hydrogen atom, an F atom, a Cl atom, a Br atom, a methyl group, an ethyl group, a propyl group, an isopropyl group, a trifluoromethyl group, an ethoxy group and a cyano group; and $R^5$ and $R^6$ are independently selected from any one of a hydrogen atom, an F atom, a Cl atom, a Br atom, a methyl group, an ethyl group, a propyl group, an isopropyl group, a trifluoromethyl group, an ethoxy group and a cyano group.

Further optionally, the group having a structure represented by General Formula (II-1) is selected from any one of the following groups:

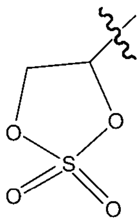 , 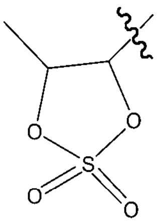 , 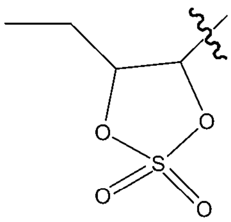 , 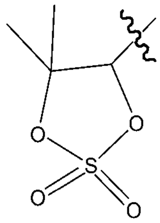 , 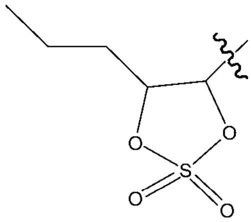 , 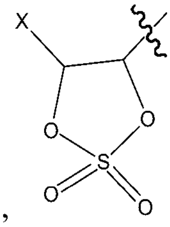

and

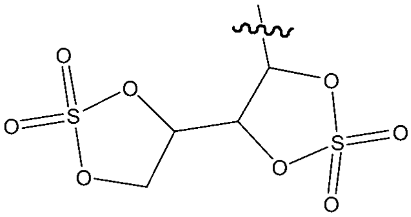 ,

where X is an F atom, a Cl atom or a Br atom.

In some embodiments, $R^1$, $R^2$, $R^3$ and $R^4$ are independently selected from any one of

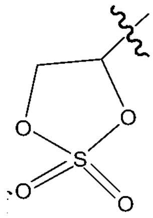 ,

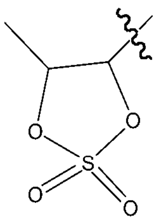 , 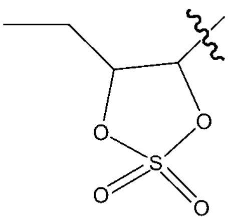 , 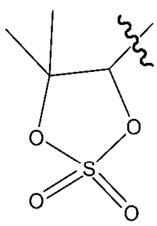 , 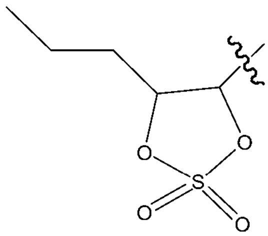 , 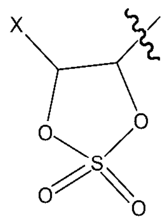 ,

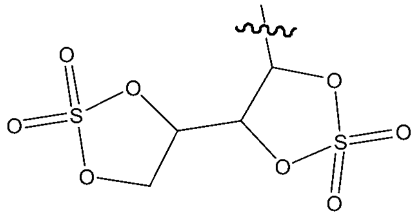
,

a hydrogen atom, an F atom, a Cl atom, a Br atom, a methyl group, an ethyl group, a propyl group, an isopropyl group, a trifluoromethyl group, an ethoxy group and a cyano group, and X is an F atom.

Optionally, $R^1$, $R^2$, $R^3$ and $R^4$ are independently selected from any one of

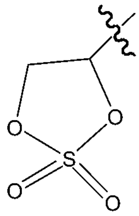
,

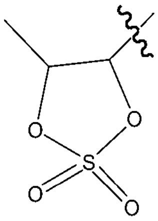
,
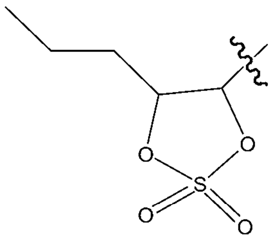
,
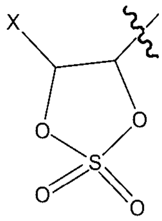
,
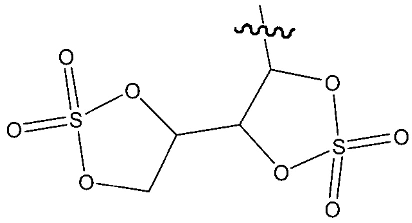
,

a hydrogen atom, an F atom, a methyl group, an ethyl group, a propyl group, a trifluoromethyl group, an ethoxy group and a cyano group, and X is an F atom.

In some embodiments, the cyclic sulfate compound is selected from the following compounds:

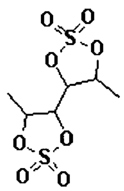
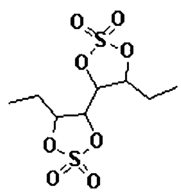
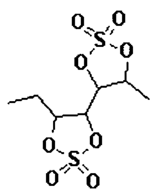
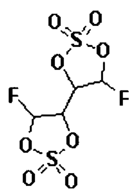
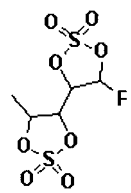
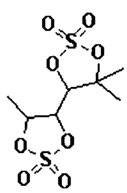
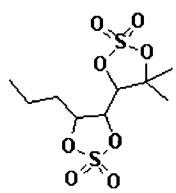
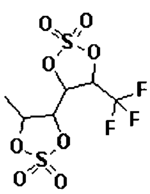
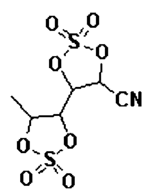
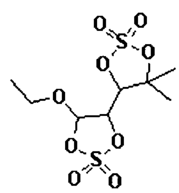
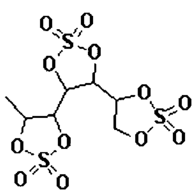
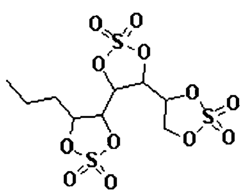
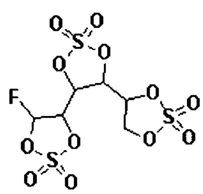
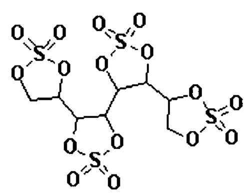

A preparation method of the above cyclic sulfate compound is simple, is conducive to popularization and implementation in industry, and has a more stable effect on improving the cycle performance of the battery.

The numbers of the above compounds are shown in the following table.

| Number | Structural Formula |
|---|---|
| Compound 1 | 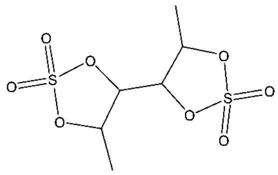 |
| Compound 2 | 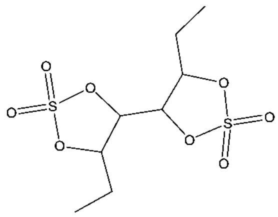 |
| Compound 3 | 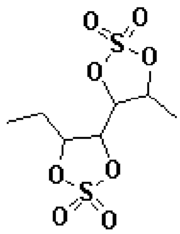 |
| Compound 4 | 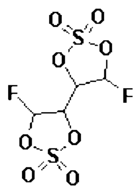 |
| Compound 5 | 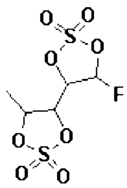 |
| Compound 6 | 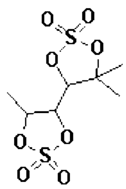 |
| Compound 7 | 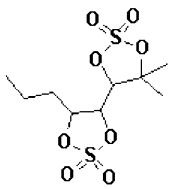 |

(continued)

| Number | Structural Formula |
|---|---|
| Compound 8 | 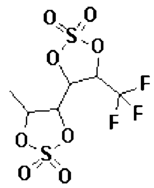 |
| Compound 9 | 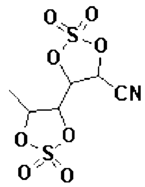 |
| Compound 10 | 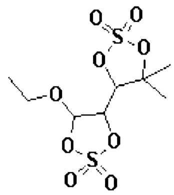 |
| Compound 11 | 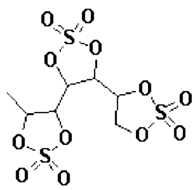 |
| Compound 12 | 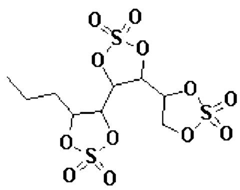 |
| Compound 13 | 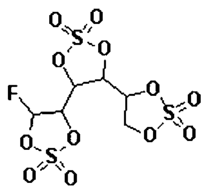 |
| Compound 14 | 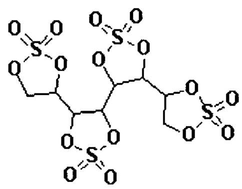 |

The preparation method of the cyclic sulfate compound having a structure represented by General Formula (I) in the present application refers to the following synthetic route:

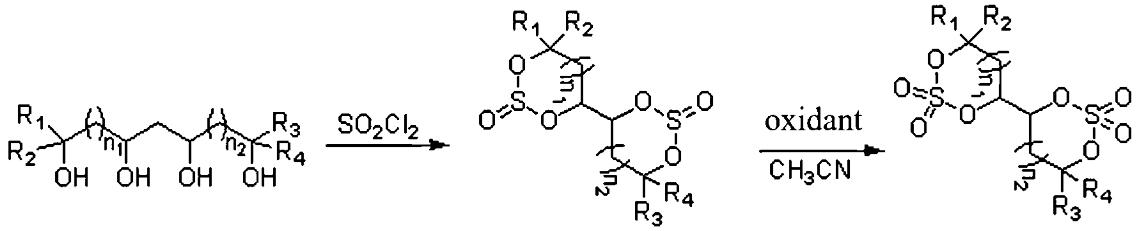


The reaction temperature of the first step is controlled at 30-60°C; and the reaction temperature of the second step is controlled at 10-30°C. The second step uses a catalyst, such as ruthenium trichloride trihydrate, for catalyzing, and an oxidant may be sodium hypochlorite, ozone, or the like. The definitions of $R^1$, $R^2$, $R^3$, $R^4$, n1 and n2 are described above.

In some embodiments, the mass content of the additive in the non-aqueous electrolyte solution is 0.001%-20%, optionally 0.0025%-16.7%, more optionally 0.005%-10%, and further optionally 0.05%-5%, such as 0.001%, 0.0025%, 0.005%, 0.01%, 0.05%, 0.1%, 0.5%, 0.8%, 1%, 2%, 3%, 5%, 7%, 8%, 9%, 10%, 11%, 12%, 13%, 15%, 16.7%, 18%, 19%, 20%, and a range consisting of any of the above values.

The mass content of the additive in the non-aqueous electrolyte solution is within the above range, which may further improve the stability and electron blocking ability of the SEI film on the surface of the negative electrode, thereby further improving the cycle performance and storage performance of the battery and reducing the cycle gas production of the battery.

In some embodiments, the mass content of the ethylene carbonate in the non-aqueous solvent is 5%-60%, optionally 10%-50%, and more optionally 20%-40%, such as 5%, 10%, 20%, 30%, 40%, 50%, 60%, and a range consisting of any of the above values.

The mass content of ethylene carbonate in the non-aqueous solvent is within the above range, which may improve the cycle performance and storage performance of the battery and reduce the cycle gas production of the battery, and is conducive to improving the conductivity of the electrolyte solution to improve the fast charging performance of the battery.

In some embodiments, the volume average particle size Dv50 of the negative electrode active material and the mass content $W_1$ of the additive in the non-aqueous electrolyte solution satisfy: $0.001 \le W_1 \times 1000/Dv50 \le 20$, and optionally $0.0025 \le W_1 \times 1000/Dv50 \le 16.7$, for example, $W_1 \times 1000/Dv50$ may be 0.001, 0.002, 0.0025, 0.005, 0.01, 0.05, 0.08, 0.1, 0.5, 1, 2, 3, 4, 5, 6, 7, 8, 9, 10, 11, 12, 13, 14, 15, 16, 17, 18, 19, 20, and a range consisting of any of the above values, where the unit of the volume average particle size Dv50 is $\mu$m.

When the above conditions are satisfied: on the one hand, the negative electrode active material has higher active ion transmission performance and electron transmission performance, and the powder compacted density of the negative electrode active material is higher; and on the other hand, side reactions between the electrolyte solution and the negative electrode are reduced, the cycle gas production of the battery is reduced, and the cycle performance and storage performance of the battery are improved.

In some embodiments, the intensity of the peak of the negative electrode active material at a Raman shift of 1360 $cm^{-1}$ is $I_D$, the intensity of the peak of the negative electrode active material at a Raman shift of 1585 $cm^{-1}$ is $I_G$, and $I_D/I_G \le 0.5$, optionally $I_D/I_G \le 0.25$, and more optionally $0.1 \le I_D/I_G \le 0.2$, for example, $I_D/I_G$ may be 0.1, 0.15, 0.2, 0.25, 0.3, 0.35, 0.4, 0.45, 0.5, and a range consisting of any of the above values.

The $I_D/I_G$ of the negative electrode active material is within the above range, which is conducive to improving the surface stability of the negative electrode active material and reducing the side reactions between the electrolyte solution and the negative electrode, thereby reducing the volume expansion of the battery during the cycle process, improving the cycle performance of the battery, and improving the storage performance.

In some embodiments, the $I_D/I_G$ of the negative electrode active material is tested by conventional methods in the art. For example, a laser micro-Raman spectrometer is used to measure the negative electrode active material (measurement conditions are as follows: a solid laser with a wavelength of 523 nm is used as a light source, the beam diameter is 1.2 $\mu$m, the power is 1 mW, a macro Raman measurement mode is used, and a CCD detector is used), the negative electrode active material is pressed into a plate, and multiple points are randomly selected on the plate for testing, and an average value is taken to obtain a Raman spectrum. The intensity of the scattering peak at the Raman shift position of 1360 $cm^{-1}$ is recorded as $I_D$, the intensity of the scattering peak at the Raman shift position of 1580 $cm^{-1}$ is recorded as $I_G$, and $I_D/I_G$ is calculated.

In some embodiments, the secondary battery is a lithium secondary battery.

[Positive electrode plate]

The positive electrode plate usually includes a positive electrode current collector and a positive electrode film

layer arranged on at least one surface of the positive electrode current collector, where the positive electrode film layer includes a positive electrode active material.

As an example, the positive electrode current collector has two surfaces opposite in its own thickness direction, and the positive electrode film layer is arranged on either or both of the two opposite surfaces of the positive electrode current collector.

In some embodiments, the positive electrode current collector may be a metal foil or a composite current collector. For example, an aluminum foil may be used as the metal foil. The composite current collector may include a high molecular material substrate layer and a metal layer formed on at least one surface of the high molecular material substrate layer. The composite current collector may be formed by forming a metal material (such as aluminum, aluminum alloy, nickel, nickel alloy, titanium, titanium alloy, silver, and silver alloy) on a high molecular material substrate (such as a substrate of polypropylene (PP), polyethylene terephthalate (PET), polybutylene terephthalate (PBT), polystyrene (PS), or polyethylene (PE)).

In some embodiments, the positive electrode active material may be a positive electrode active material for batteries well known in the art. As an example, the positive electrode active material may include at least one of the following materials: a lithium-containing phosphate with an olivine structure, a lithium transition metal oxide, and respective modified compounds thereof. However, the present application is not limited to these materials, and other conventional materials that can be used as positive electrode active materials for batteries may also be used. These positive electrode active materials may be used alone or in a combination of two or more thereof. Examples of lithium transition metal oxides may include, but are not limited to, at least one of a lithium-cobalt oxide (such as $LiCoO_2$), a lithium-nickel oxide (such as $LiNiO_2$), a lithium-manganese oxide (such as $LiMnO_2$ or $LiMn_2O_4$), a lithium-nickel-cobalt oxide, a lithium-manganese-cobalt oxide, a lithium-nickel-manganese oxide, a lithium-nickel-cobalt-manganese oxide (such as $LiNi_{1/3}Co_{1/3}Mn_{1/3}O_2$ (also abbreviated as $NCM_{333}$), $LiNi_{0.3}Co_{0.2}Mn_{0.3}O_2$ (also abbreviated as $NCM_{523}$), $LiNi_{0.3}Co_{0.25}Mn_{0.25}O_2$ (also abbreviated as $NCM_{211}$), $LiNi_{0.6}Co_{0.2}Mn_{0.2}O_2$ (also abbreviated as $NCM_{622}$), $LiNi_{0.8}Co_{0.1}Mn_{0.1}O_2$ (also abbreviated as $NCM_{811}$)), a lithium-nickel-cobalt-aluminum oxide (such as $LiNi_{0.85}Co_{0.15}Al_{0.05}O_2$), and a modified compound thereof. Examples of lithium-containing phosphates having an olivine structure may include, but are not limited to, at least one of lithium iron phosphate (e.g., $LiFePO_4$ (also abbreviated as LFP)), lithium iron phosphate and carbon composites, lithium manganese phosphate (e.g., $LiMnPO_4$), lithium manganese phosphate and carbon composites, lithium iron manganese phosphate, and lithium iron manganese phosphate and carbon composites.

In some embodiments, the positive electrode film layer further optionally includes a binder. As an example, the binder may include at least one of polyvinylidene fluoride (PVDF), polytetrafluoroethylene (PTFE), a vinylidene fluoride-tetrafluoroethylene-propylene terpolymer, a vinylidene fluoride-hexafluoropropylene-tetrafluoroethylene terpolymer, a tetrafluoroethylene-hexafluoropropylene copolymer, and a fluorine-containing acrylate resin.

In some embodiments, the positive electrode film layer further optionally includes a conductive agent. As an example, the conductive agent may include at least one of superconducting carbon, acetylene black, carbon black, Ketjen black, carbon dot, carbon nanotube, graphene, and carbon nanofiber.

In some embodiments, the positive electrode plate may be prepared by: dispersing the above components, such as the positive electrode active material, the conductive agent, the binder and any other components, for preparing the positive electrode plate in a solvent (such as N-methyl pyrrolidone) to form a positive electrode slurry; and coating the positive electrode slurry on the positive electrode current collector, and performing drying and cold pressing processes to obtain the positive electrode plate.

[Negative electrode plate]

The negative electrode plate includes a negative electrode current collector and a negative electrode film layer arranged on at least one surface of the negative electrode current collector, where the negative electrode film layer includes a negative electrode active material.

As an example, the negative electrode current collector has two surfaces opposite in its own thickness direction, and the negative electrode film layer is arranged on either one or both of the two opposite surfaces of the negative electrode current collector.

In some embodiments, the negative electrode current collector may be a metal foil or a composite current collector. For example, a copper foil may be used as the metal foil. The composite current collector may include a high molecular material substrate layer and a metal layer formed on at least one surface of the high molecular material substrate. The composite current collector may be formed by forming a metal material (copper, copper alloy, nickel, nickel alloy, titanium, titanium alloy, silver, and silver alloy) on a high molecular material substrate (such as a substrate of polypropylene (PP), polyethylene terephthalate (PET), polybutylene terephthalate (PBT), polystyrene (PS), or polyethylene (PE)).

In some embodiments, a negative electrode active material for the battery well known in the art may be used as the negative electrode active material. As an example, the negative electrode active material may include at least one of

the following materials: artificial graphite, natural graphite, soft carbon, hard carbon, silicon-based material, tin-based material, lithium titanate, etc. The silicon-based material may be selected from at least one of elemental silicon, silicon-oxygen compound, silicon-carbon complex, silicon-nitrogen complex, and silicon alloy. The tin-based material may be selected from at least one of elemental tin, tin-oxygen compound, and tin alloy. However, the present application is not limited to these materials, and other conventional materials that can be used as negative electrode active materials for batteries may also be used. These negative electrode active materials may be used alone or in a combination of two or more thereof.

In some embodiments, the negative electrode film layer further optionally includes a binder. As an example, the binder may be selected from at least one of styrene butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA) and carboxymethyl chitosan (CMCS).

In some embodiments, the negative electrode film layer further optionally includes a conductive agent. As an example, the conductive agent may be selected from at least one of superconducting carbon, acetylene black, carbon black, Ketjen black, carbon dot, carbon nanotube, graphene, and carbon nanofiber.

In some embodiments, the negative electrode film layer further optionally includes other adjuvants, for example, a thickener (such as sodium carboxymethyl cellulose (CMC-Na)).

In some embodiments, the negative electrode plate may be prepared by: dispersing the above components, such as the negative electrode active material, the conductive agent, the binder and any other components, for preparing the negative electrode plate in a solvent (such as deionized water) to form a negative electrode slurry; and coating the negative electrode slurry on a negative electrode current collector, and performing drying and cold pressing processes to obtain the negative electrode plate.

[Electrolyte]

The electrolyte plays a role in conducting ions between the positive electrode plate and the negative electrode plate.

In some embodiments, the electrolyte includes an electrolyte salt and other solvents.

In some embodiments, the electrolyte salt may be selected from at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalato)borate, lithium difluoro bis(oxalato)phosphate, and lithium tetrafluoro(oxalato)phosphate.

In some embodiments, other solvents may be selected from at least one of ethyl methyl carbonate, diethyl carbonate, dimethyl carbonate, dipropyl carbonate, methyl propyl carbonate, ethyl propyl carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone, and diethyl sulfone.

In some embodiments, the electrolyte solution further optionally includes other additives. As an example, the electrolyte solution may include a positive electrode film-forming additive, and may further include an additive capable of improving certain performance of the battery, such as an additive capable of improving the overcharging performance of the battery and an additive capable of improving the high-temperature or low-temperature performance of the battery.

[Separator]

In some embodiments, the secondary battery further comprises a separator. The type of the separator is not particularly limited in the present application, and any well-known separator with a porous structure having good chemical stability and mechanical stability may be selected.

In some embodiments, the material of the separator may be selected from at least one of glass fiber, non-woven fabric, polyethylene, polypropylene, and polyvinylidene fluoride. The separator may be a single-layer film or a multi-layer composite film, and is not particularly limited. When the separator is a multi-layer composite film, the material of each layer may be the same or different, which is not particularly limited.

In some embodiments, the positive electrode plate, the negative electrode plate and the separator may be made into an electrode assembly by a winding process or a stacking process.

In some embodiments, the secondary battery may include an outer package. The outer package may be configured to encapsulate the above electrode assembly and electrolyte.

In some embodiments, the outer package of the secondary battery may be a hard shell, such as a hard plastic shell, an aluminum shell, or a steel shell. The outer package of the secondary battery may also be a soft package, such as a bag-type soft package. The material of the soft package may be plastic, and examples of the plastic may include polypropylene, polybutylene terephthalate, polybutylene succinate, etc.

The shape of the secondary battery is not particularly limited in the present application, and the secondary battery

may be in a cylinder shape, a square shape, or any other shapes. For example, FIG. 1 shows a secondary battery 5 with a square structure as an example.

In some embodiments, referring to FIG. 2, the outer package may include a case 51 and a cover plate 53. The case 51 may include a bottom plate and a side plate connected to the bottom plate, and the bottom plate and the side plate are enclosed to form an accommodating cavity. The case 51 has an opening in communication with the accommodating cavity, and the cover plate 53 may cover the opening to close the accommodating cavity. The positive electrode plate, the negative electrode plate and the separator may be formed into an electrode assembly 52 by a winding process or a stacking process. The electrode assembly 52 is encapsulated in the accommodating cavity. The electrode assembly 52 is impregnated with the electrolyte solution. One or more electrode assemblies 52 contained in the secondary battery 5 may be provided, and may be selected by those skilled in the art according to specific actual requirements.

In some embodiments, the secondary batteries may be assembled into a battery module, one or more secondary batteries contained in the battery module may be provided, and the specific number may be selected by those skilled in the art according to the application and capacity of the battery module.

FIG. 3 shows a battery module 4 as an example. Referring to FIG. 3, in the battery module 4, a plurality of secondary batteries 5 may be sequentially arranged along the length direction of the battery module 4. Of course, any other arrangements are also possible. The plurality of secondary batteries 5 may further be fixed by fasteners.

Optionally, the battery module 4 may further include a shell having an accommodating space, and the plurality of secondary batteries 5 are accommodated in the accommodating space.

In some embodiments, the above battery modules may further be assembled into a battery pack, one or more battery modules contained in the battery pack may be provided, and the specific number may be selected by those skilled in the art according to the application and capacity of the battery pack.

FIG. 4 and FIG. 5 show a battery pack 1 as an example. Referring to FIG. 4 and FIG. 5, the battery pack 1 may include a battery box and a plurality of battery modules 4 arranged in the battery box. The battery box includes an upper box 2 and a lower box 3, and the upper box 2 may cover the lower box 3 to form a closed space for accommodating the battery modules 4. The plurality of battery modules 4 may be arranged in the battery box in any manner.

In addition, the present application further provides an electrical apparatus. The electrical apparatus includes at least one of the secondary battery, battery module and battery pack provided in the present application. The secondary battery, the battery module, or the battery pack may be used as a power source for the electrical apparatus, and may also be used as an energy storage unit for the electrical apparatus. The electrical apparatus may include, but is not limited to, a mobile device (such as a mobile phone, and a laptop), an electric vehicle (such as an all-electric vehicle, a hybrid electric vehicle, a plug-in hybrid electric vehicle, an electric bicycle, an electric scooter, an electric golf cart, and an electric truck), an electric train, a ship, a satellite, an energy storage system, etc.

For the electrical apparatus, the secondary battery, the battery module, or the battery pack may be selected according to use requirements.

FIG. 6 shows an electrical apparatus as an example. The electrical apparatus is an all-electric vehicle, a hybrid electric vehicle, a plug-in hybrid electric vehicle, or the like. In order to meet the requirements of the electrical apparatus for high power and high energy density of a secondary battery, a battery pack or a battery module may be used.

## Examples

Examples of the present application will be described below. The examples described below are illustrative and only used to explain the present application, and cannot be construed as limiting the present application. If no specific techniques or conditions are specified in the examples, the techniques or conditions described in the literatures in the art or in accordance with the product specification shall be followed. The reagents or instruments used without manufacturer indicated are all commercially available conventional products. The information of other reagents or compounds is recorded in Table 1.

Table 1

| Material | Structural Formula | CAS number |
|---|---|---|
| 1,6-dideoxygalactitol | 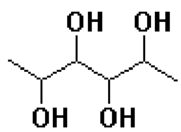 | 25289-20-7 |

(continued)

| Material | Structural Formula | CAS number |
|---|---|---|
| 3,4,5,6-octanetetraol | 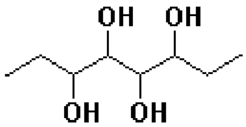 | 2165939-88-6 |
| 2,3,4,5-heptatetraol | 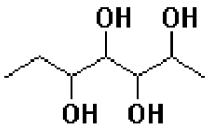 | 2629309-49-3 |
| 1,2,3,4,5.6-heptahexanol | 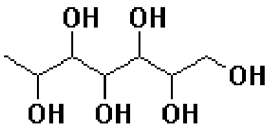 | 688007-16-1 |
| Octitol | 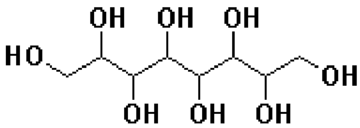 | 63976-32-9 |
| Comparative Compound 1 | 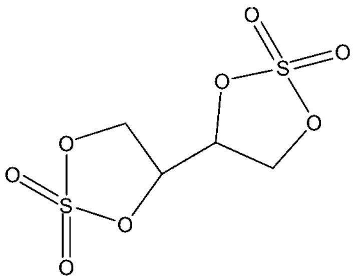 | 1431298-10-0 |
| Comparative Compound 2 | 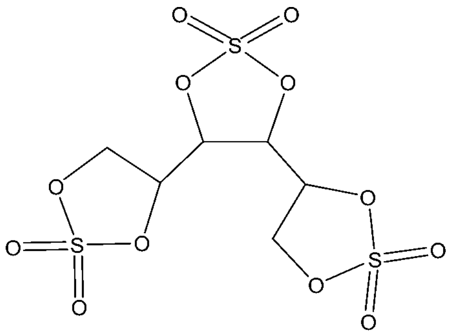 | 2793408-99-6 |

**Preparation Example 1:** Synthesis of Compound 1

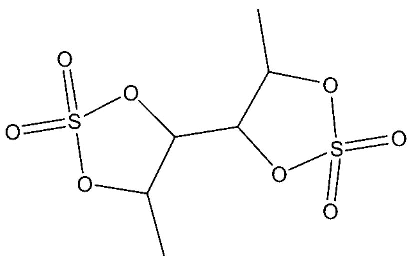

Step 1: 300 g (2 mol) of solid 1,6-dideoxygalactitol was added to a 2 L three-necked flask, stirring was started, and

523 g (4.4 mol) of thionyl chloride was dropwise added to the three-necked flask. The temperature was controlled at about 15°C during the dropwise adding process. After the dropwise adding process was completed, the reaction was kept at 45°C for 4 h, and a large amount of paste-like solids were precipitated from the reaction solution. After cooling, 1 L of deionized water was slowly added dropwise, the reaction system was quickly stirred for dispersing, the filtered solids were pulped and washed with deionized water for multiple times until the pH was neutral, and the filter cake was dried at 60°C under reduced pressure to obtain an intermediate product.

Step 2: 184.2 g (0.8 mol) of intermediate product 1 was added to a 3 L three-necked flask, 1000 mL of acetonitrile was added, and 80 mg of ruthenium trichloride trihydrate catalyst was added. After nitrogen replacement of the system, the system was cooled to 20°C, stirring was started, 2000 g of 20% sodium hypochlorite aqueous solution was dropwise added within 1 h, and the reaction temperature was controlled at 10-20°C. After the dropwise adding process was completed, stirring was performed at 10-20°C for 10 min, the solution was separated, and an organic phase was quenched with a sodium sulfite aqueous solution until the starch potassium iodide test paper does not turn blue. The solution was separated again, an organic layer was concentrated, and acetonitrile was crystallized to obtain a white powder solid, namely the above compound 1.

1H-NMR, $CD_3CN$, $\delta$ ppm 5.42-5.39 (m, 2H), 5.36-5.34 (m, 2H), 1.67-1.65 (d, 6H).

**Preparation Example 2:** Synthesis of Compound 2

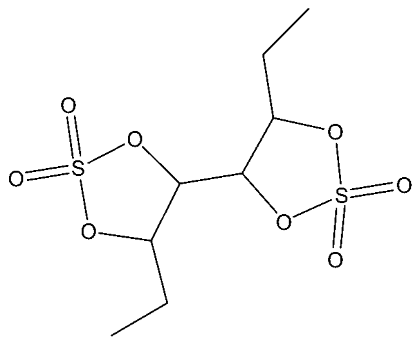

Step 1: 356.5 g (2 mol) of solid 3,4,5,6-octanetetraol was added to a 2 L three-necked flask, stirring was started, and 523 g (4.4 mol) of thionyl chloride was dropwise added to the three-necked flask. The temperature was controlled at about 15°C during the dropwise adding process. After the dropwise adding process was completed, the reaction was kept at 45°C for 4 h, and a large amount of paste-like solids were precipitated from the reaction solution. After cooling, 1 L of deionized water was slowly added dropwise, the reaction system was quickly stirred for dispersing, the filtered solids were pulped and washed with deionized water for multiple times until the pH was neutral, and the filter cake was dried at 60°C under reduced pressure to obtain an intermediate product.

Step 2: 216.2 g (0.8 mol) of intermediate product 1 was added to a 3 L three-necked flask, 1000 mL of acetonitrile was added, and 80 mg of ruthenium trichloride trihydrate catalyst was added. After nitrogen replacement of the system, the system was cooled to 20°C, stirring was started, 2000 g of 20% sodium hypochlorite aqueous solution was dropwise added within 1 h, and the reaction temperature was controlled at 10-20°C. After the dropwise adding process was completed, stirring was performed at 10-20°C for 10 min, the solution was separated, and an organic phase was quenched with a sodium sulfite aqueous solution until the starch potassium iodide test paper does not turn blue. The solution was separated again, an organic layer was concentrated, and acetonitrile was crystallized to obtain a compound 2.

**Preparation Example 3:** Synthesis of Compound 3

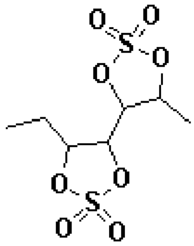

Step 1: 328.4 g (2 mol) of solid 2,3,4,5-heptatetraol was added to a 2 L three-necked flask, stirring was started, and 523 g (4.4 mol) of thionyl chloride was dropwise added to the three-necked flask. The temperature was controlled at about 15°C during the dropwise adding process. After the dropwise adding process was completed, the reaction was kept at 45°C for 4 h, and a large amount of paste-like solids were precipitated from the reaction solution. After cooling, 1 L of deionized water was slowly added dropwise, the reaction system was quickly stirred for dispersing, the filtered solids were pulped and washed with deionized water for multiple times until the pH was neutral, and the filter cake was dried at 60°C under reduced pressure to obtain an intermediate product.

Step 2: 205 g (0.8 mol) of intermediate product 1 was added to 23 three-necked flask, 1000 mL of acetonitrile was added and stirred until the solids were completely dissolved, and 80 mg of ruthenium trichloride trihydrate catalyst was added. After nitrogen replacement of the system, the system was cooled to 20°C, stirring was started, 2000 g of 20% sodium hypochlorite aqueous solution was dropwise added within 1 h, and the reaction temperature was controlled at 10-20°C. After the dropwise adding process was completed, stirring was performed at 10-20°C for 10 min, the solution was separated, and an organic phase was quenched with a sodium sulfite aqueous solution until the starch potassium iodide test paper does not turn blue. The solution was separated again, an organic layer was concentrated, and acetonitrile was crystallized to obtain a compound 3 (163.1 g, yield: 82.8%).

**Preparation Example 4:** Synthesis of Compound 9

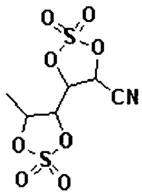

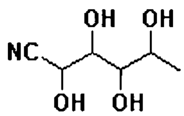

(CAS No.: 7460-93-7) was used to replace 1,6-dideoxygalactitol, and the rest was the same as in Preparation Example 1. Compound LC-MS: 285.25.

**Preparation Example 5:** Synthesis of Compound 11

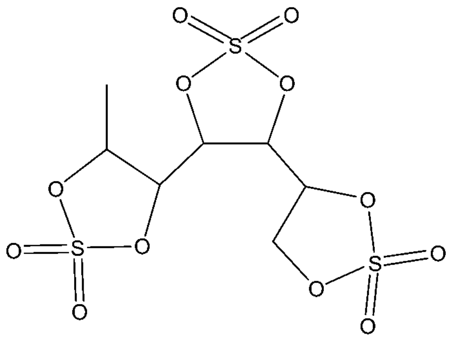

Step 1: 392.4 g (2 mol) of solid 1,2,3,4,5.6-heptahexanol was added to a 2 L three-necked flask, stirring was started, and 784.5 g (6.6 mol) of thionyl chloride was dropwise added to the three-necked flask. The temperature was controlled at about 15°C during the dropwise adding process. After the dropwise adding process was completed, the reaction was kept at 45°C for 4 h, and a large amount of paste-like solids were precipitated from the reaction solution. After cooling, 1 L of deionized water was slowly added dropwise, the reaction system was quickly stirred for dispersing, the filtered solids were pulped and washed with deionized water for multiple times until the pH was neutral, and the filter cake was dried at 60°C under reduced pressure to obtain an intermediate product.

Step 2: 140 g (0.4 mol) of intermediate product 1 was added to a 4 L three-necked flask, 1000 mL of acetonitrile was added, and 110 mg of ruthenium trichloride trihydrate catalyst was added. After nitrogen replacement of the system, the system was cooled to 20°C, stirring was started, 1500 g of 20% sodium hypochlorite aqueous solution was dropwise added within 1 h, and the reaction temperature was controlled at 10-20°C. After the dropwise adding process was completed, stirring was performed at 10-20°C for 10 min, the solution was separated, and an organic phase was quenched with a sodium sulfite aqueous solution until the starch potassium iodide test paper does not turn blue. The solution was separated again, an organic layer was concentrated, and acetonitrile was crystallized to obtain a compound 11.

**Preparation Example 6:** Synthesis of Compound 14

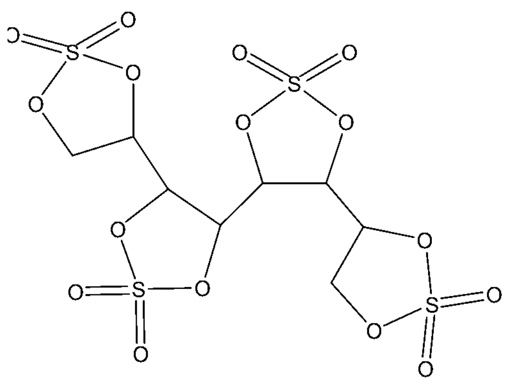

Step 1: 484 g (2 mol) of solid octitol was added to a 2 L three-necked flask, stirring was started, and 1046 g (8.8 mol) of thionyl chloride was dropwise added to the three-necked flask. The temperature was controlled at about 15°C during the dropwise adding process. After the dropwise adding process was completed, the reaction was kept at 45°C for 4 h, and a large amount of paste-like solids were precipitated from the reaction solution. After cooling, 1 L of deionized water was slowly added dropwise, the reaction system was quickly stirred for dispersing, the filtered solids were pulped and washed with deionized water for multiple times until the pH was neutral, and the filter cake was dried at 60°C under reduced pressure to obtain an intermediate product.

Step 2: 183.2 g (0.4 mol) of intermediate product was added to a 4 L three-necked flask, 1000 mL of acetonitrile was added, and 150 mg of ruthenium trichloride trihydrate catalyst was added. After nitrogen replacement of the system, the system was cooled to 20°C, stirring was started, 2000 g of 20% sodium hypochlorite aqueous solution was dropwise added within 1 h, and the reaction temperature was controlled at 10-20°C. After the dropwise adding process was completed, stirring was performed at 10-20°C for 10 min, the solution was separated, and an organic phase was quenched with a sodium sulfite aqueous solution until the starch potassium iodide test paper does not turn blue. The solution was separated again, an organic layer was concentrated, and acetonitrile was crystallized to obtain a compound 14.

The preparation methods of compounds 4 to 8, compound 10, and compounds 12 to 13 refer to the preparation methods of the above preparation examples and the compounds represented by General Formulas.

**Example 1**

(1) Preparation of electrolyte solution: In a glove box in an argon atmosphere ($H_2O$<0.1ppm, $O_2$<0.1ppm), organic solvents, i.e., ethylene carbonate (EC) and ethyl methyl carbonate (EMC) were uniformly mixed according to a volume ratio of 3/7. Then, 2% (mass percentage content in electrolyte solution) of additive compound 1-1 and 12.5% (mass percentage content in electrolyte solution) of $LiPF_6$ were added and dissolved in the organic solvents, and stirred uniformly to obtain an electrolyte solution.

(2) Preparation of negative electrode plate: A negative electrode active material, i.e., graphite, a conductive agent, i.e., carbon black, a binder, i.e., styrene butadiene rubber (SBR), and a thickener, i.e., sodium carboxymethyl cellulose (CMC-Na) were dissolved in a solvent, i.e., deionized water according to a weight ratio of 90:4:4:2, and then mixed uniformly to prepare a negative electrode slurry; and the negative electrode slurry was uniformly coated on a negative electrode current collector, i.e., a copper foil once or more times, followed by drying, cold pressing and slitting to obtain a negative electrode plate.

(3) Preparation of positive electrode plate: A positive electrode active material, i.e., lithium iron phosphate (LiFePO4), a conductive agent, i.e., acetylene black, and a binder, i.e., polyvinylidene fluoride (PVDF) were dissolved in a solvent, i.e., N-methyl pyrrolidone (NMP) according to a weight ratio of 90:5:5, and fully stirred and mixed uniformly to obtain a positive electrode slurry; and then, the positive electrode slurry was uniformly coated on a positive electrode current collector, followed by drying, cold pressing and slitting to obtain a positive electrode plate.

(4) Separator: A conventional polypropylene film was used as a separator.

(5) Assembly of secondary battery: The above positive electrode plate, separator and negative electrode plate were stacked sequentially, the separator was located between the positive electrode plate and the negative electrode plate to play a role of isolation, and then, the above positive electrode plate, separator and negative electrode plate were wound to obtain an electrode assembly; and the electrode assembly was put into a battery case and dried, then injected with the electrolyte solution, and subsequently subjected to processes such as formation and standing to obtain a secondary battery.

The preparation methods of secondary batteries in Examples 2-33 and Comparative Examples 1-4 were similar to that in Example 1, and different product parameters were detailed in Table 2. The unit of the volume average particle size Dv50 in $W_1 \times 1000$/Dv50 is μm.

Table 2: Parameter results of Examples 1-33 and Comparative Examples 1-4

| Number | Additive | Dv50 particle size (μm) of negative electrode active material | Mass content of ethylene carbonate in solvent | Mass content $W_1$ of additive in electrolyte solution | $W_1 \times 1000$/Dv50 | $I_D/I_G$ of negative electrode active material |
|---|---|---|---|---|---|---|
| Example 1 | Compound 1 | 10 | 30% | 2% | 2 | 0.15 |
| Example 2 | Compound 2 | 10 | 30% | 2% | 2 | 0.15 |
| Example 3 | Compound 3 | 10 | 30% | 2% | 2 | 0.15 |
| Example 4 | Compound 4 | 10 | 30% | 2% | 2 | 0.15 |
| Example 5 | Compound 5 | 10 | 30% | 2% | 2 | 0.15 |
| Example 6 | Compound 6 | 10 | 30% | 2% | 2 | 0.15 |
| Example 7 | Compound 7 | 10 | 30% | 2% | 2 | 0.15 |
| Example 8 | Compound 8 | 10 | 30% | 2% | 2 | 0.15 |
| Example 9 | Compound 9 | 10 | 30% | 2% | 2 | 0.15 |
| Example 10 | Compound 10 | 10 | 30% | 2% | 2 | 0.15 |

(continued)

| Number | Additive | Dv50 particle size (μm) of negative electrode active material | Mass content of ethylene carbonate in solvent | Mass content $W_1$ of additive in electrolyte solution | $W_1 \times 1000/$ Dv50 | $I_D/I_G$ of negative electrode active material |
|---|---|---|---|---|---|---|
| Example 11 | Compound 11 | 10 | 30% | 2% | 2 | 0.15 |
| Example 12 | Compound 12 | 10 | 30% | 2% | 2 | 0.15 |
| Example 13 | Compound 13 | 10 | 30% | 2% | 2 | 0.15 |
| Example 14 | Compound 14 | 10 | 30% | 2% | 2 | 0.15 |
| Example 15 | Compound 1 | 6 | 30% | 2% | 3.33 | 0.15 |
| Example 16 | Compound 1 | 8 | 30% | 2% | 2.5 | 0.15 |
| Example 17 | Compound 1 | 15 | 30% | 2% | 1.33 | 0.15 |
| Example 18 | Compound 1 | 20 | 30% | 2% | 1 | 0.15 |
| Example 19 | Compound 1 | 10 | 30% | 0.005% | 0.5 | 0.15 |
| Example 20 | Compound 1 | 10 | 30% | 10% | 10 | 0.15 |
| Example 21 | Compound 1 | 10 | 10% | 2% | 2 | 0.15 |
| Example 22 | Compound 1 | 10 | 50% | 2% | 2 | 0.15 |
| Example 23 | Compound 1 | 10 | 30% | 0.0025% | 0.0025 | 0.15 |
| Example 24 | Compound 1 | 10 | 30% | 16.7% | 16.7 | 0.15 |
| Example 25 | Compound 1 | 10 | 30% | 2% | 2 | 0.1 |
| Example 26 | Compound 1 | 10 | 30% | 2% | 2 | 0.2 |
| Example 27 | Compound 1 | 10 | 30% | 2% | 2 | 0.25 |
| Example 28 | Compound 1 | 10 | 30% | 0.001% | 0.001 | 0.15 |
| Example 29 | Compound 1 | 10 | 30% | 15% | 15 | 0.15 |
| Example 30 | Compound 1 | 10 | 5% | 2% | 2 | 0.15 |
| Example 31 | Compound 1 | 10 | 60% | 2% | 2 | 0.15 |
| Example 32 | Compound 1 | 10 | 30% | 20% | 20 | 0.15 |
| Example 33 | Compound 1 | 10 | 30% | 2% | 2 | 0.5 |
| Comparative Example 1 | Comparative Compound 1 | 10 | 30% | 2% | 2 | 0.15 |
| Comparative Example 2 | Comparative Compound 2 | 10 | 30% | 2% | 2 | 0.15 |
| Comparative Example 3 | Compound 1 | 3 | 30% | 2% | 6.67 | 0.15 |
| Comparative Example 4 | Compound 1 | 25 | 30% | 2% | 0.8 | 0.15 |

**Material test and battery test**

(1) Test of volume average particle size Dv50:

According to GB/T 19077-2016 "Particle Size Distribution Laser Diffraction Method", the Mastersizer 2000E laser particle size analyzer produced by Malvern Instruments Ltd., UK, was used for measurement.

(2) $I_D/I_G$ test of negative electrode active material:

The negative electrode active material was measured by a LabRAM HR Evolution laser micro-Raman spectrometer, where a solid laser with a wavelength of 523 nm was used as a light source, the beam diameter was 1.2 μm, and the power was 1 mW; a macro Raman measurement mode was used; and a CCD detector was used. The negative electrode active material powder was pressed into a plate, three points were randomly selected on the plate for testing, and an average value was taken.

The intensity of the scattering peak at the Raman shift position of 1360 $cm^{-1}$ was recorded as $I_D$, the intensity of the scattering peak at the Raman shift position of 1580 $cm^{-1}$ was recorded as $I_G$, and $I_D/I_G$ was calculated.

(3) Test of cycle performance at 60°C:

At 60°C, the secondary battery was first fully discharged at 1 C and then tested. Test process: At 60°C, the secondary battery was charged at a constant current of 0.5 C until the voltage was 3.65 V, then charged at a constant voltage of 3.65 V until the current was 0.05 C, allowed to stand for 5 min, and then discharged at a constant current of 0.5 C until the voltage was 2.5 V, which forms a charge and discharge cycle process, and the discharge capacity in this cycle was the discharge capacity of the first cycle. The secondary battery was subjected to multiple cycle charge and discharge tests according to the above method, the cycling capacity retention rate of the secondary battery was calculated according to the following formula until the cycling capacity retention rate decays to 80%, and the number of cycles of the secondary battery was recorded.

Cycling capacity retention rate (%) of secondary battery = (discharge capacity of Nth cycle of secondary battery/discharge capacity of first cycle of secondary battery) x 100%.

(4) Test of storage performance:

In a constant temperature environment at 25°C, the secondary battery was charged to 3.65 V at 0.33 C, and then discharged to 2.5 V at 0.33 C, and the discharge capacity $D_1$ was tested. The secondary battery was stored in a constant temperature environment at 60°C and taken out for testing every 30 days. Each time the secondary battery was taken out for testing, the secondary battery was cooled to 25°C, and the secondary battery was first charged to 3.65 V at 0.33 C and then discharged to 2.5 V at 0.33 C to test the discharge capacity. The storage days and discharge capacity of each test were recorded, and a graph was drawn with the storage days as the X-axis and the discharge capacity as the Y-axis to obtain the storage days when the discharge capacity decays to 80% of $D_1$.

(5) Test of volume expansion rate:

At 25°C, the secondary battery was first fully discharged at 1 C and then tested. Test process: The secondary battery was charged at a constant current of 0.5 C until the voltage was 3.65 V, then charged at a constant voltage of 3.65 V until the current was 0.05 C, allowed to stand for 5 min, and then discharged at a constant current of 0.5 C until the voltage was 2.5 V, which forms a charge and discharge cycle process, the discharge capacity in this cycle was the discharge capacity of the first cycle, and a drainage method was used to test the volume V1 of the battery at this time. Then, the secondary battery was charged and discharged for multiple cycles according to the above method, and the cycling capacity retention rate of the secondary battery was calculated according to the following formula until the cycling capacity retention rate decays to 80%. The cycle was terminated, the secondary battery was placed in an environment at 25°C, a drainage method was used to test the volume V2 of the secondary battery, and then, the volume expansion rate of the secondary battery was calculated according to the following formula.

Cycling capacity retention rate (%) of secondary battery = (discharge capacity of Nth cycle of secondary battery/discharge capacity of first cycle of secondary battery) x 100%.

$$\text{Volume expansion rate (\%) of secondary battery} = 100\% \times (V2 - V1)/V1$$

The results of the above items (1) to (2) are shown in Table 1, and the results of the above items (3) to (5) are shown in Table 3.

Table 3: Performance test results of Examples 1-33 and Comparative Examples 1-4

| Number | Number of cycles when cycling capacity retention rate decays to 80% at 60°C | Storage days when cycling capacity retention rate decays to 80% of D1 at 60°C | Battery volume expansion rate when cycling capacity retention rate decays to 80% |
|---|---|---|---|
| Example 1 | 1531 | 268 | 5.40% |
| Example 2 | 1513 | 247 | 5.70% |
| Example 3 | 1522 | 253 | 5.50% |
| Example 4 | 1478 | 235 | 6.10% |
| Example 5 | 1486 | 241 | 5.90% |
| Example 6 | 1497 | 245 | 5.80% |
| Example 7 | 1465 | 237 | 6.30% |
| Example 8 | 1452 | 243 | 6.20% |
| Example 9 | 1437 | 231 | 6.70% |
| Example 10 | 1501 | 249 | 5.50% |
| Example 11 | 1511 | 251 | 5.60% |
| Example 12 | 1501 | 248 | 5.60% |
| Example 13 | 1487 | 238 | 6.20% |
| Example 14 | 1478 | 234 | 6.50% |
| Example 15 | 1418 | 237 | 6.10% |
| Example 16 | 1478 | 246 | 5.70% |
| Example 17 | 1489 | 257 | 5.60% |
| Example 18 | 1422 | 251 | 5.90% |
| Example 19 | 1301 | 213 | 6.70% |
| Example 20 | 1499 | 257 | 5.50% |
| Example 21 | 1289 | 205 | 6.90% |
| Example 22 | 1411 | 242 | 6.50% |
| Example 23 | 1201 | 202 | 6.90% |
| Example 24 | 1299 | 243 | 5.80% |
| Example 25 | 1467 | 270 | 5.70% |
| Example 26 | 1411 | 252 | 5.65% |
| Example 27 | 1321 | 243 | 5.71% |
| Example 28 | 1157 | 187 | 7.87% |
| Example 29 | 1342 | 247 | 5.65% |
| Example 30 | 1211 | 194 | 7.57% |
| Example 31 | 1324 | 231 | 6.91% |
| Example 32 | 1201 | 231 | 5.88% |
| Example 33 | 1301 | 211 | 5.76% |

(continued)

| Number | Number of cycles when cycling capacity retention rate decays to 80% at 60°C | Storage days when cycling capacity retention rate decays to 80% of D1 at 60°C | Battery volume expansion rate when cycling capacity retention rate decays to 80% |
|---|---|---|---|
| Comparative Example 1 | 1257 | 215 | 7.50% |
| Comparative Example 2 | 1201 | 207 | 7.70% |
| Comparative Example 3 | 1107 | 214 | 7.90% |
| Comparative Example 4 | 1377 | 228 | 6.50% |

According to the above results, it can be seen that:

Compared with Comparative Example 1, the batteries in Examples 1-10 of the present application have higher cycle performance and storage performance and lower cycle gas production. Compared with Comparative Example 2, the batteries in Examples 11-13 of the present application have higher cycle performance and storage performance and lower cycle gas production. Compared with Comparative Examples 3-4, the batteries in Example 1 and Examples 15-18 of the present application have higher cycle performance and storage performance and lower cycle gas production. This indicates that the cycle performance and storage performance of the secondary battery of the present application are significantly improved, and the cycle gas production is significantly reduced.

Compared with Examples 23 and 28, the batteries in Example 1 and Examples 19-20 of the present application have higher cycle performance and storage performance and lower cycle gas production. Compared with Examples 24 and 32, the cycle performance of the batteries in Example 1 and Examples 19-20 of the present application is further improved.

Compared with Example 30, the batteries in Example 1 and Examples 21-22 of the present application have higher cycle performance and storage performance and lower cycle gas production.

Compared with Example 33, the batteries in Example 1 and Examples 25-27 of the present application have higher cycle performance and storage performance and lower cycle gas production.

It should be noted that the present application is not limited to the above embodiments. The above embodiments are only examples, and embodiments that have the same composition and exert the same effects as the technical ideas within the scope of the technical solution of the present application are included in the technical scope of the present application. In addition, other embodiments constructed by applying various modifications conceivable to those skilled in the art to the embodiments and combining some of the constituent elements of the embodiments without departing from the scope of the essence of the present application are also included in the scope of the present application.

## Claims

1. A secondary battery, comprising a negative electrode plate and a non-aqueous electrolyte solution, wherein the negative electrode plate comprises a negative electrode active material, the volume average particle size Dv50 of the negative electrode active material is 6-20 μm, and optionally 8-15 μm, the non-aqueous electrolyte solution comprises an additive and a non-aqueous solvent, and the non-aqueous solvent comprises ethylene carbonate;

    the additive comprises a cyclic sulfate compound represented by Formula (I),

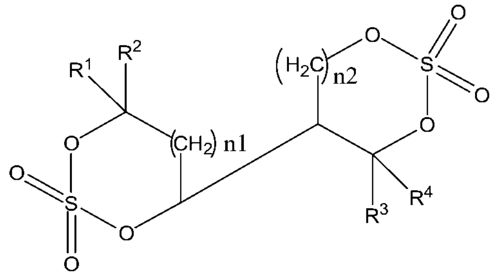

Formula (I)

wherein $R^1$, $R^2$, $R^3$ and $R^4$ are independently selected from any one of a group having a structure represented by Formula (II), a hydrogen atom, a halogen atom, a C1-C6 alkyl group, a C1-C6 haloalkyl group, a C1-C6 alkoxy group, a C1-C6 haloalkoxy group, a C2-C6 alkenyl group, a C2-C6 ester group, a cyano group and a sulfonic acid group, and n1 and n2 are independently any integer from 0 to 2;

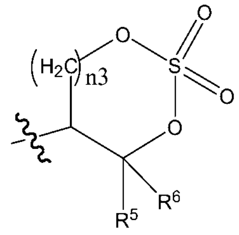

Formula (II)

$R^5$ and $R^6$ are independently selected from any one of a hydrogen atom, a halogen atom, a C1-C6 alkyl group, a C1-C6 haloalkyl group, a C1-C6 alkoxy group, a C1-C6 haloalkoxy group, a C2-C6 alkenyl group, a C2-C6 ester group, a cyano group and a sulfonic acid group, and n3 is any integer from 0 to 2;
$R^1$ and $R^2$ are not hydrogen atoms at the same time, and $R^3$ and $R^4$ are not hydrogen atoms at the same time; alternatively, $R^1$, $R^2$, $R^3$, $R^4$, $R^5$ and $R^6$ satisfy the following conditions:

$R^1$ and $R^2$ are hydrogen atoms at the same time, one of $R^3$ and $R^4$ is a hydrogen atom and the other is any one of a group having a structure represented by General Formula (II), a halogen atom, a C1-C6 alkyl group, a C1-C6 haloalkyl group, a C1-C6 alkoxy group, a C1-C6 haloalkoxy group, a C2-C6 alkenyl group, a C2-C6 ester group, a cyano group and a sulfonic acid group, and $R^5$ and $R^6$ in the group having a structure represented by General Formula (II) are not hydrogen atoms at the same time;
alternatively, $R^1$, $R^2$, $R^3$, $R^4$, $R^5$ and $R^6$ satisfy the following conditions:
$R^3$ and $R^4$ are hydrogen atoms at the same time, one of $R^1$ and $R^2$ is a hydrogen atom and the other is any one of a group having a structure represented by General Formula (II), a halogen atom, a C1-C6 alkyl group, a C1-C6 haloalkyl group, a C1-C6 alkoxy group, a C1-C6 haloalkoxy group, a C2-C6 alkenyl group, a C2-C6 ester group, a cyano group and a sulfonic acid group, and $R^5$ and $R^6$ in the group having a structure represented by General Formula (II) are not hydrogen atoms at the same time.

**2.** The secondary battery according to claim 1, wherein the cyclic sulfate compound has a structure represented by Formula (1-1),

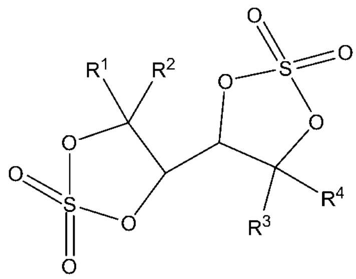

Formula (I-1)

wherein $R^1$, $R^2$, $R^3$ and $R^4$ are independently selected from any one of a group having a structure represented by General Formula (II-1), a hydrogen atom, a halogen atom, a C1-C6 alkyl group, a C1-C6 haloalkyl group, a C1-C6 alkoxy group, a C1-C6 haloalkoxy group, a C2-C6 alkenyl group, a C2-C6 ester group, a cyano group and a sulfonic acid group; and

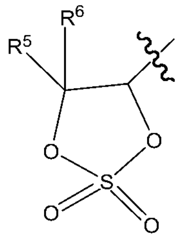

Formula (II-1)

$R^5$ and $R^6$ are independently selected from any one of a hydrogen atom, a halogen atom, a C1-C6 alkyl group, a C1-C6 haloalkyl group, a C1-C6 alkoxy group, a C1-C6 haloalkoxy group, a C2-C6 alkenyl group, a C2-C6 ester group, a cyano group and a sulfonic acid group.

**3.** The secondary battery according to claim 2, wherein

$R^1$, $R^2$, $R^3$ and $R^4$ are independently selected from any one of a group having a structure represented by General Formula (II-1), a hydrogen atom, a halogen atom, a C1-C3 alkyl group, a C1-C3 haloalkyl group, a C1-C3 alkoxy group, a C1-C3 haloalkoxy group and a cyano group; and $R^5$ and $R^6$ are independently selected from any one of a hydrogen atom, a halogen atom, a C1-C3 alkyl group, a C1-C3 haloalkyl group, a C1-C3 alkoxy group, a C1-C3 haloalkoxy group and a cyano group;
optionally, $R^1$, $R^2$, $R^3$ and $R^4$ are independently selected from any one of a group having a structure represented by General Formula (II-1), a hydrogen atom, a halogen atom, a C1-C3 alkyl group, a C1-C3 haloalkyl group, a C1-C3 alkoxy group and a cyano group; and $R^5$ and $R^6$ are independently selected from any one of a hydrogen atom, a halogen atom, a C1-C3 alkyl group, a C1-C3 haloalkyl group, a C1-C3 alkoxy group and a cyano group;
more optionally, $R^1$, $R^2$, $R^3$ and $R^4$ are independently selected from any one of a group having a structure represented by General Formula (II-1), a hydrogen atom, an F atom, a Cl atom, a Br atom, a methyl group, an ethyl group, a propyl group, an isopropyl group, a trifluoromethyl group, an ethoxy group and a cyano group; and $R^5$ and $R^6$ are independently selected from any one of a hydrogen atom, an F atom, a Cl atom, a Br atom, a methyl group, an ethyl group, a propyl group, an isopropyl group, a trifluoromethyl group, an ethoxy group and a cyano group; and
further optionally, the group having a structure represented by General Formula (II-1) is selected from any one of the following groups:

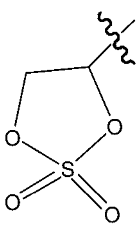 , 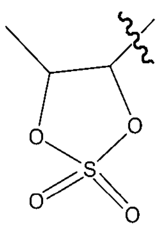 , 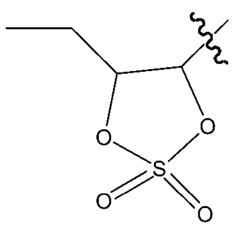 , 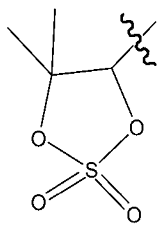 , 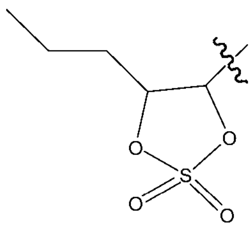 , 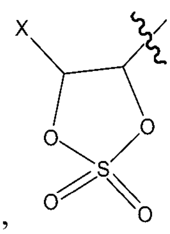

and

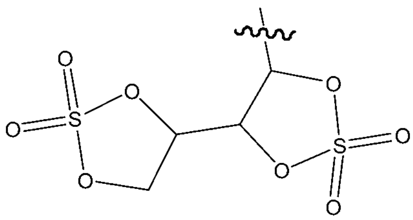 ,

wherein X is an F atom, a Cl atom or a Br atom.

**4.** The secondary battery according to any one of claims 1 to 3, wherein $R^1$, $R^2$, $R^3$ and $R^4$ are independently selected from any one of

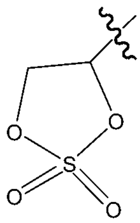, 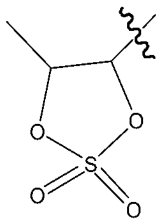, 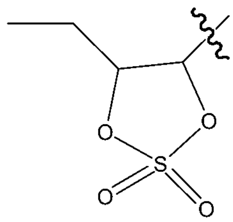, 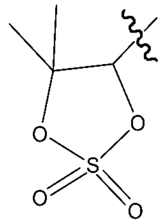,

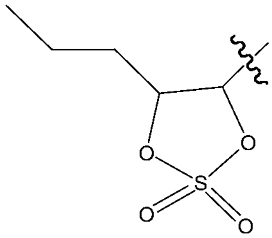, 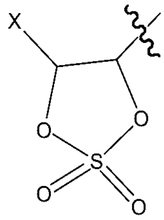, 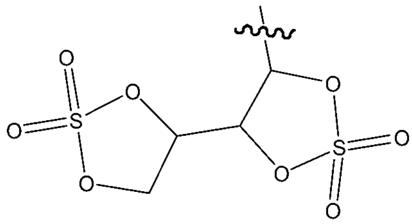,

a hydrogen atom, an F atom, a Cl atom, a Br atom, a methyl group, an ethyl group, a propyl group, an isopropyl group, a trifluoromethyl group, an ethoxy group and a cyano group, and X is an F atom; and
optionally, $R^1$, $R^2$, $R^3$ and $R^4$ are independently selected from any one of

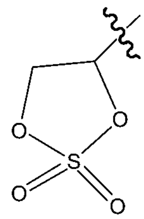,

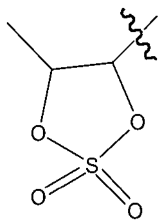, 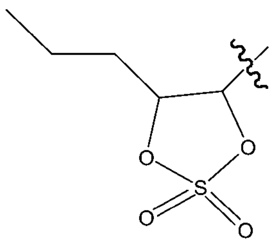, 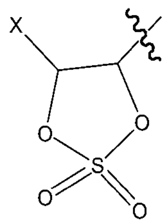, 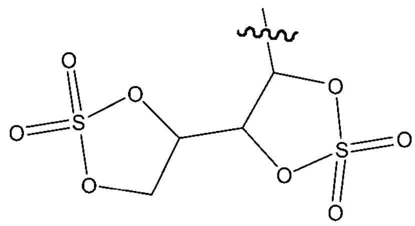,

a hydrogen atom, an F atom, a methyl group, an ethyl group, a propyl group, a trifluoromethyl group, an ethoxy group and a cyano group, and X is an F atom.

**5.** The secondary battery according to any one of claims 1 to 4, wherein the cyclic sulfate compound is selected from the following compounds:

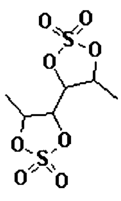 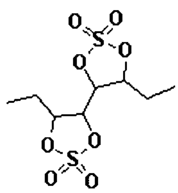 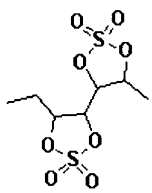 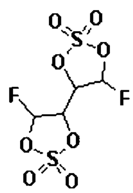 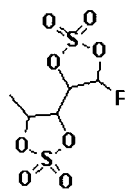

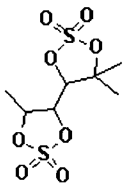 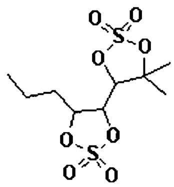 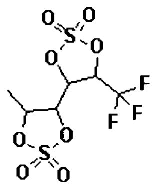 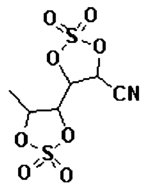 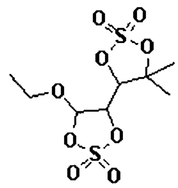

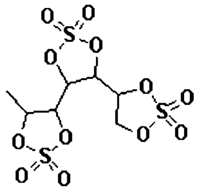 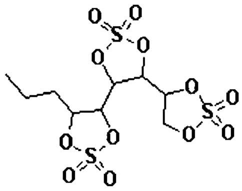 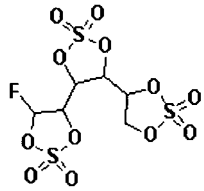 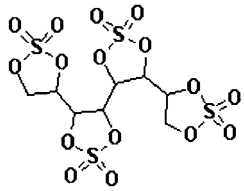 .

**6.** The secondary battery according to any one of claims 1 to 5, wherein the mass content of the additive in the non-aqueous electrolyte solution is 0.001%-20%, optionally 0.0025%-16.7%, more optionally 0.005%-10%, and further optionally 0.05%-5%.

**7.** The secondary battery according to any one of claims 1 to 6, wherein the mass content of the ethylene carbonate in the non-aqueous solvent is 5%-60%, optionally 10%-50%, and more optionally 20%-40%.

**8.** The secondary battery according to any one of claims 1 to 7, wherein the volume average particle size Dv50 of the negative electrode active material and the mass content $W_1$ of the additive in the non-aqueous electrolyte solution satisfy: $0.001 \leq W_1 \times 1000/Dv50 \leq 20$, and optionally $0.0025 \leq W_1 \times 1000/Dv50 \leq 16.7$, wherein the unit of the volume average particle size Dv50 is $\mu$m.

**9.** The secondary battery according to any one of claims 1 to 8, wherein the intensity of the peak of the negative electrode active material at a Raman shift of 1360 $cm^{-1}$ is $I_D$, the intensity of the peak of the negative electrode active material at a Raman shift of 1580 $cm^{-1}$ is $I_G$, and $I_D/I_G \leq 0.5$, optionally $I_D/I_G \leq 0.25$, and more optionally $0.1 \leq I_D/I_G \leq 0.2$.

**10.** The secondary battery according to any one of claims 1 to 9, wherein the secondary battery is a lithium secondary battery.

**11.** An electrical apparatus, comprising the secondary battery according to any one of claims 1 to 10.

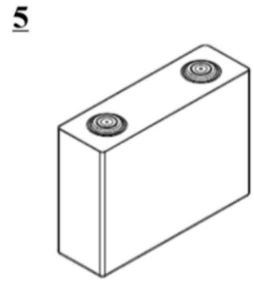


FIG. 1

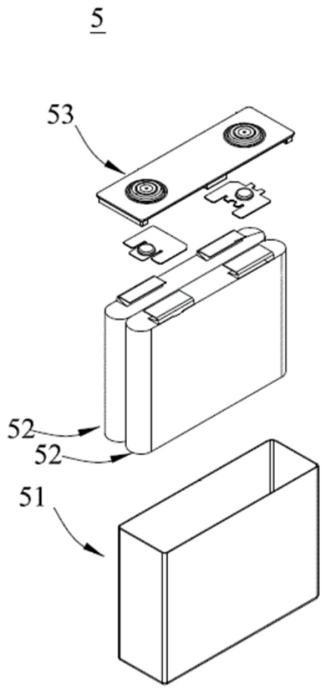


FIG. 2

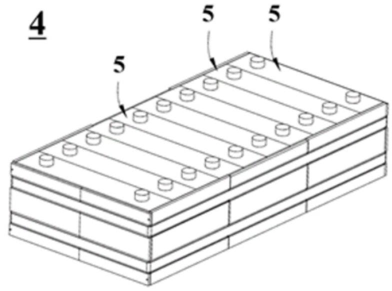


FIG. 3

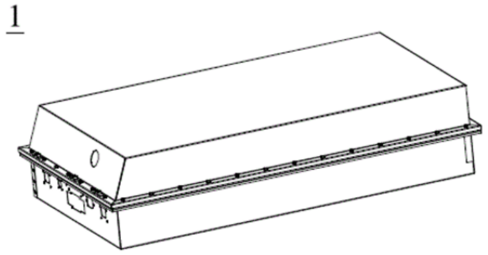


FIG. 4

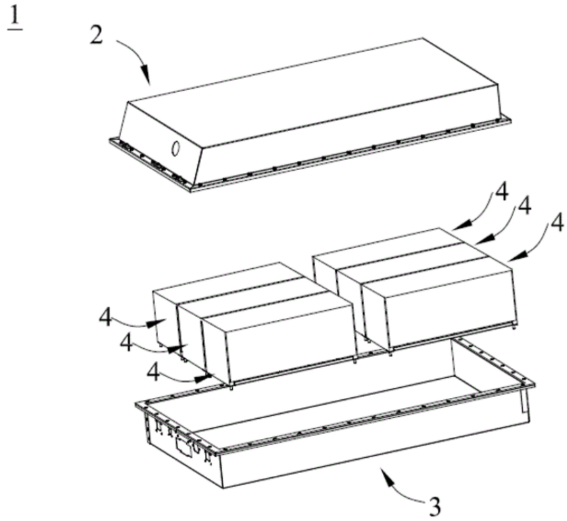


FIG. 5

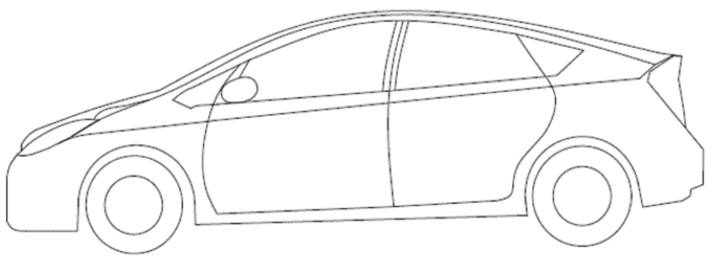

FIG. 6

**INTERNATIONAL SEARCH REPORT**

International application No.
**PCT/CN2023/097749**

**A. CLASSIFICATION OF SUBJECT MATTER**

H01M 10/0567(2010.01)i; H01M 10/052(2010.01)i

According to International Patent Classification (IPC) or to both national classification and IPC

**B. FIELDS SEARCHED**

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

CNABS; CNTXT; ENTXT; ENTXTC; DWPI; CNKI: 锂, 非水, 二次电池, 电解液, 负极, 碳酸乙烯酯, 碳酸亚乙酯, EC, 环形, 环状, 硫酸酯, 添加剂, 拉曼, ID/IG, lithium, nonaqueous, secondary, battery, electrolyte, negative, ethylene, carbonate, cyclic, sulfate, additive, Raman

**C. DOCUMENTS CONSIDERED TO BE RELEVANT**

| Category* | Citation of document, with indication, where appropriate, of the relevant passages | Relevant to claim No. |
|---|---|---|
| X | JP 2021034298 A (GS YUASA CORP.) 01 March 2021 (2021-03-01) description, paragraphs 12-110, and figures 1-2 | 1-8, 10-11 |
| Y | JP 2021034298 A (GS YUASA CORP.) 01 March 2021 (2021-03-01) description, paragraphs 12-110, and figures 1-2 | 9 |
| X | JP 2017208246 A (GS YUASA CORP.) 24 November 2017 (2017-11-24) description, paragraphs 19-65 | 1-8, 10-11 |
| Y | JP 2017208246 A (GS YUASA CORP.) 24 November 2017 (2017-11-24) description, paragraphs 19-65 | 9 |
| X | CN 108701864 A (CENTRAL GLASS CO., LTD.) 23 October 2018 (2018-10-23) description, paragraphs 37-165 | 1-8, 10-11 |
| Y | CN 108701864 A (CENTRAL GLASS CO., LTD.) 23 October 2018 (2018-10-23) description, paragraphs 37-165 | 9 |

☑ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **08 December 2023** | **21 December 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | Telephone No. |

Form PCT/ISA/210 (second sheet) (July 2022)

**INTERNATIONAL SEARCH REPORT**

International application No.
**PCT/CN2023/097749**

**C. DOCUMENTS CONSIDERED TO BE RELEVANT**

| Category* | Citation of document, with indication, where appropriate, of the relevant passages | Relevant to claim No. |
|---|---|---|
| X | CN 112563573 A (NINGDE GUOTAI HUARONG NEW MATERIAL CO., LTD.) 26 March 2021 (2021-03-26)<br>description, paragraphs 6-59 | 1-8, 10-11 |
| Y | CN 112563573 A (NINGDE GUOTAI HUARONG NEW MATERIAL CO., LTD.) 26 March 2021 (2021-03-26)<br>description, paragraphs 6-59 | 9 |
| Y | CN 103493276 A (NEC CORP.) 01 January 2014 (2014-01-01)<br>description, paragraphs 16-102 | 9 |
| Y | CN 104247139 A (NEC CORP.) 24 December 2014 (2014-12-24)<br>description, paragraphs 133-173 | 9 |
| A | CN 105474452 A (MITSUI CHEMICALS INC.) 06 April 2016 (2016-04-06)<br>entire document | 1-11 |
| A | JP 2014170689 A (MITSUI CHEMICALS INC.) 18 September 2014 (2014-09-18)<br>entire document | 1-11 |

Form PCT/ISA/210 (second sheet) (July 2022)

**INTERNATIONAL SEARCH REPORT**
**Information on patent family members**

International application No.
**PCT/CN2023/097749**

| Patent document cited in search report | Publication date (day/month/year) | Patent family member(s) | Publication date (day/month/year) |
|---|---|---|---|
| JP 2021034298 A | 01 March 2021 | JP 7371396 B2 | 31 October 2023 |
| JP 2017208246 A | 24 November 2017 | JP 6631404 B2 | 15 January 2020 |
| CN 108701864 A | 23 October 2018 | PL 3416229 T3 | 16 November 2020 |
| | | JPWO 2017138452 A1 | 06 December 2018 |
| | | JP 6955165 B2 | 27 October 2021 |
| | | WO 2017138452 A1 | 17 August 2017 |
| | | HUE 049503 T2 | 28 September 2020 |
| | | KR 20180108796 A | 04 October 2018 |
| | | KR 20210013779 A | 05 February 2021 |
| | | KR 102391374 B1 | 27 April 2022 |
| | | US 2021020992 A1 | 21 January 2021 |
| | | US 11302964 B2 | 12 April 2022 |
| | | EP 3416229 A1 | 19 December 2018 |
| | | EP 3416229 A4 | 20 March 2019 |
| | | EP 3416229 B1 | 13 May 2020 |
| CN 112563573 A | 26 March 2021 | None | |
| CN 103493276 A | 01 January 2014 | WO 2012141301 A1 | 18 October 2012 |
| | | EP 2698855 A1 | 19 February 2014 |
| | | EP 2698855 A4 | 10 December 2014 |
| | | EP 2698855 B1 | 21 February 2018 |
| | | JPWO 2012141301 A1 | 28 July 2014 |
| | | US 2014023935 A1 | 23 January 2014 |
| CN 104247139 A | 24 December 2014 | US 2015118577 A1 | 30 April 2015 |
| | | WO 2013161774 A1 | 31 October 2013 |
| | | JPWO 2013161774 A1 | 24 December 2015 |
| CN 105474452 A | 06 April 2016 | WO 2015045989 A1 | 02 April 2015 |
| | | KR 20160032215 A | 23 March 2016 |
| | | KR 20180026809 A | 13 March 2018 |
| | | KR 101948490 B1 | 14 February 2019 |
| | | US 2016211551 A1 | 21 July 2016 |
| | | US 9899704 B2 | 20 February 2018 |
| | | JP 6017697 B2 | 02 November 2016 |
| | | JPWO 2015045989 A1 | 09 March 2017 |
| | | TW 201523966 A | 16 June 2015 |
| | | TWI 661594 B | 01 June 2019 |
| | | EP 3051619 A1 | 03 August 2016 |
| | | EP 3051619 A4 | 19 April 2017 |
| | | EP 3051619 B1 | 15 August 2018 |
| JP 2014170689 A | 18 September 2014 | None | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- GB 190772016 T


### Non-patent literature cited in the description


- *CHEMICAL ABSTRACTS*, 25289-20-7
- *CHEMICAL ABSTRACTS*, 2165939-88-6
- *CHEMICAL ABSTRACTS*, 2629309-49-3
- *CHEMICAL ABSTRACTS*, 688007-16-1
- *CHEMICAL ABSTRACTS*, 63976-32-9
- *CHEMICAL ABSTRACTS*, 1431298-10-0
- *CHEMICAL ABSTRACTS*, 2793408-99-6
- *CHEMICAL ABSTRACTS*, 7460-93-7